Europäisches Patentamt

European Patent Office

Office européen des brevets

(11) EP 1 333 382 A1

(19)

(12) **EUROPÄISCHE PATENTANMELDUNG**

(43) Veröffentlichungstag:
06.08.2003 Patentblatt 2003/32

(51) Int Cl.7: **G06F 17/00**, G01N 30/86

(21) Anmeldenummer: 02002215.8

(22) Anmeldetag: 30.01.2002

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **Agilent Technologies, Inc. (a Delaware corporation)**
**Palo Alto, CA 94303 (US)**

(72) Erfinder: **Kuderer, Hubert**
**76337 Waldbronn (DE)**

(74) Vertreter: **Harbach, Thomas**
**Agilent Technologies Deutschland GmbH**
**Patentabteilung,**
**Herrenbergerstrasse 130**
**71034 Böblingen (DE)**

(54) **Verfahren zur Bearbeitung von Messdaten und Vorrichtung zur Durchführung des Verfahrens**

(57) Die Erfindung betrifft ein Verfahren zur Bearbeitung von Meßdaten und eine Vorrichtung zur Durchführung des Verfahrens, wobei die Meßdaten unter Verwendung eines Meßsystems, insbesondere eines chromatographischen Analysensystems, zur Messung von Meßwerten meßbar sind, die bestimmten Nutzinformationen über bzw. von einem technischen Prozeß zugeordnet sind und die von wenigstens zwei Variablen abhängig sind. Dabei werden die folgenden Maßnahmen getroffen:

e) Durchführung eines Kalibrationsschritts umfassend:

$a_1$) Stimulierung des Meßsystems durch Veränderung von systematische Meßfehler verursachenden Einflußgrößen und Erfassung der zugehörigen Meßdaten mit Hilfe des Meßsystems;

$a_2$) Ermittlung von systematischen Meßfehlern zugeordneten Effektvektoren aus den in Schritt $a_1$) erfaßten Meßdaten, unter Anwendung eines mathematischen Verfahrens, insbesondere einer Faktoranalyse, wobei die den Meßfehlern zugeordneten Effektvektoren einem mathematischen Modell zu Grunde liegen, mit dem die Meßdaten zumindest annähernd abschätzbar sind und das wenigstens einen Fehlerterm beinhaltet, der einen einem Meßfehler zugeordneten Effektvektor und einen zugehörigen Fehlerbeitrag umfaßt;

f) Durchführung eines Meßschrittes umfassend:

$b_1$) Erfassung von Meßdaten, die bestimmten Nutzinformationen über den bzw. von dem technischen Prozeß zugeordnet sind, während der technische Prozeß abläuft;

$b_2$) Zerlegung der in Schritt $b_1$) erfaßten Meßdaten in Linearkomponenten, basierend auf den gemäß Schritt $a_2$) ermittelten, den Meßfehlern zugeordneten Effektvektoren, unter Anwendung eines mathematischen Verfahrens, insbesondere einer linearen Regression, zur Ermittlung der Fehlerbeiträge, anhand derer die um systematische Meßfehler bereinigten Nutzinformationen bestimmbar sind.

Fig. 1

EP 1 333 382 A1

**Beschreibung**

Die Erfindung betrifft ein Verfahren zur Bearbeitung von Meßdaten, die unter Verwendung eines Meßsystems zur Messung von Meßwerten meßbar sind, die bestimmten Nutzinformationen über bzw. von einem technischen Prozeß zugeordnet sind und die von wenigstens zwei Variablen abhängig sind und eine Vorrichtung zur Durchführung des Verfahrens.

Eine derartige 2-dimensionale Meßdatenstruktur findet sich beispielsweise bei analytischen Meßsystemen, insbesondere im Bereich der UV/VIS Absorptionsmeßtechnik. Dabei werden Diodenarray-Detektoren (DADs) eingesetzt. Diese gewinnen immer mehr an Bedeutung, weil einerseits das UV/VIS Absorptionsmeßverfahren das bedeutendste unter den verschiedenen analytischen Detektionstechniken darstellt und andererseits generieren DADs online Signale über die Wellenlänge (Spektren) und über die Zeit (Chromatogramme). Die UV/VIS Absorptions-Meßtechnik stellt einen guten Kompromiss aus guter Empfindlichkeit, hoher Selektivität und linearem Meßbereich über mehrere Größenordnungen dar. Aus der 2-dimensionalen Datenstruktur können Informationen über die Identität (Spektren) der zu analysierenden Substanzen und über die Menge an Probensubstanz (Konzentrationsverlauf) abgeleitet werden.

In herkömmlichen Verfahren wird entlang der Zeitachse bei ausgewählten Wellenlängen der Konzentrationsverlauf der zu untersuchenden Substanzen ermittelt, nachdem mittels chromatographischer Analysentechnik die Substanzen eines Probengemisches zeitlich separiert wurden. Die Meß-Wellenlänge wird hierbei so gewählt, daß aufgrund des Absorptionsvermögens der jeweiligen Substanz optimale Meßbedingungen vorliegen. Dies bedeutet, daß bei geringen Konzentrationen eine Wellenlänge mit hoher Extinktion und bei hohen Konzentrationen eher eine Wellenlänge mit kleiner Extinktion, bzw. als Kompromiß mit mittlerer Extinktion gewählt wird.

Aus dem Konzentrationsverlauf läßt sich durch Integration über der Zeit und nach entsprechender Eichung die jeweilige Substanzmenge bestimmen.

Aus den Datenpunkten entlang der Wellenlängenachse werden die Spektren ermittelt. Die Spektren weisen eine substanzspezifische spektrale Charakteristik auf, die zur Identifizierung der gemessenen Substanzen verwendet wird. Die Identifizierung erfolgt durch Vergleich mit den Spektren von bekannten Substanzen. Häufig werden aus den vorliegenden Meßdaten auch Informationen über die Vollständigkeit der Trennung abgeleitet. Dies wird dadurch erreicht, daß das Spektrum zu Beginn eines chromatographischen Peaks mit dem Spektrum des Peakmaximums bzw. mit dem Spektrum am Peak-Ende verglichen wird. Unterscheiden sich die Spektren nur durch einen Faktor, geht man davon aus, daß der vorliegende Peak während der Analyse vollständig getrennt wurde. Damit kann die Substanzmenge des zugehörigen Peaks korrekt bestimmt werden.

Bei mit DADs arbeitenden Meßsystemen unterliegen die gemessenen Daten einer Reihe von unerwünschten Einflußgrößen, die sich nachteilig auf die Genauigkeit und Zuverlässigkeit der Meßergebnisse auswirken können. Derartige Einflußgrößen sind auf die Unzulänglichkeit der verwendeten Systemkomponenten und auf die Variation der Umgebungsbedingungen zurückzuführen oder sie begründen sich in der Auswahl der Analysenparameter bezüglich der Meßmethode.

Zu diesen Einflußgrößen zählen die Stabilität der Intensität und der räumlichen Ausdehnung des Plasmas der Lichtquelle, Veränderungen der optischen Abbildung durch thermische Ausdehnung des Aufbaues, Beeinflussung des optischen Strahlenganges durch das Lösungsmittel und strömungsbedingte Vorgänge in der Flußzelle (Brechungsindex, Strömungsprofil, etc.), Beeinflussung des Meß-Systems durch Störungen von anderen Modulen (z.B. durch Druckstöße, Pumpenripple, etc.), Störungen, die von außen auf das Meß-System einwirken und sich auf den Signalen abbilden, Degradations- oder Alterungserscheinungen beteiligter Systemkomponenten, thermisches Aufwärm- oder Einschwingverhalten, statistisches Rauschen bzw. musterhaftes Rauschen und ähnliche Störungen.

Zur Stabilität der Lichtquelle:

In spektrophotometrischen Meßsystemen werden häufig Gasentladungslampen (z.B. Deuteriumlampen) als Lichtquelle verwendet. Zwischen der Anode und der Kathode einer solchen Lichtquelle bildet sich nach dem Zündvorgang ein leuchtendes Plasma aus. Die Intensität und die räumliche Ausdehnung des Plasmas unterliegt zeitlichen Schwankungen, die auf die Stabilität der Stromversorgung und die Brenneigenschaft aufgrund der technischen Ausführung der individuellen Lampe zurückzuführen sind. Solche Schwankungen übertragen sich als Fehler auf die Meßergebnisse.

Zur thermischen Ausdehnung des optischen Aufbaues:

Aufgrund von Schwankungen der Umgebungsbedingungen werden wegen der thermischen Ausdehnung der verwendeten Materialien die Abbildungseigenschaften des optischen Aufbaues beeinflußt. Dies führt ebenfalls zu Fehlern in den Meßergebnissen.

Zur Beeinflussung des optischen Strahlenganges durch das verursachende Lösungsmittel und strömungsbedingte Vorgänge in der Flusszelle:

Durch die Flußzelle werden während einer Analyse die zu messenden Substanzen geleitet, die durch die chromatographische Trennung in der Säule separiert wurden und in der mobilen Phase aufgelöst sind. Bei der Absorptionsmessung werden die Veränderungen der Intensitäten und der spektralen Zusammensetzung des Lichts gemessen, welches durch die Vorgänge in der Flußzelle verursacht werden. Daraus wird der Absorptionsverlauf und auf der Grundlage des Lambert-Beer'schen Gesetzes der Konzentrationsverlauf der zu untersuchenden Substanzen ermittelt. Hieraus kann durch geeignete Verfahren die Substanzmenge der zu untersuchenden Probe berechnet werden.

Abhängig von der Analysenmethode wird in vielen Fällen während einer Analyse die Zusammensetzung der mobilen Phase gezielt verändert, um die Trennung der Substanzen zu optimieren. Dies bedeutet, daß sich während der Analyse die optischen Eigenschaften der mobilen Phase aufgrund der dynamischen Änderung des Brechungsindexes und Absorptionscharakteristik mit verändern und dadurch die Meßergebnisse zum Teil erheblich beeinflußt werden. Der Wert für den statischen Brechungsindex der mobilen Phase wird ebenfalls durch Temperaturschwankungen beeinflußt. Außerdem wirken sich Druckschwankungen, die durch die Lösungsmittelpumpen verursacht werden, nachteilig auf die optischen Eigenschaften aus.

Zur Beeinflussung der Ergebnisse durch statistisches Rauschen bzw. musterhaftes Rauschen:

Ein den Meßwerten überlagertes statistisches Rauschen wird durch stochastische Vorgänge verursacht, die bei der Emission des Lichtes durch Gasentladung und bei der Detektion der Photonen durch einen Photosensor auftreten. Dem fügen sich weitere Rauschterme, verursacht durch die Schaltkreise der Signalverarbeitungselektronik bzw. durch die Einflüsse aus der Umgebung hinzu. Die Charakteristik solcher Rauschterme kann einer statistischen Verteilungsfunktion unterliegen oder sie kann durch systembedingte Muster geprägt sein.

Das Rauschen wirkt sich nachteilig auf die Genauigkeit der Meßergebnisse aus und es limitiert die Nachweisgrenze des Meß-Systems. Dem begegnet man bislang durch Filtern der Meßdaten in Zeit- und Wellenlängendimension. Dies geht allerdings zu Lasten der zeitlichen bzw. spektralen Auflösung der Signale.

Schon immer war es eine Herausforderung, bei der Konstruktion von Meßgeräten Auswirkungen von Einflußgrößen gering zu halten, damit die Meßergebnisse nicht signifikant verfälscht werden. In der Vergangenheit wurden zur Erfüllung der gestellten Anforderungen zum Teil komplexe Lösungsansätze realisiert. Entsprechend der Komplexität der Lösungsansätze wurden unterschiedliche Ergebnisse erreicht.

Um möglichst hohe Anforderungen an die Genauigkeit und Präzision der Meßergebnisse zu erfüllen, wurden bislang sogenannte Zweistrahlsysteme aufgebaut, um die Auswirkungen der Instabilität der Intensität und der räumlichen Ausdehnung der Lichtquelle zu unterdrücken. Die optischen Strahlenbündel werden in einen Referenz- und in einen Analysepfad aufgeteilt. Geht man davon aus, daß für beide Pfade identische optische Abbildungseigenschaften vorliegen, können Störungen durch Verhältnisbildung eliminiert werden. Bei genauerer Betrachtung ist aber festzustellen, daß zwei optische Pfade mit gleichen Eigenschaften schwerlich realisiert werden können. Die Schwierigkeiten bestehen darin, daß der Analysepfad die eigentliche Flußzelle einschließt, während sich im Referenzpfad eine Nachbildung einer solchen Flußzelle befindet.

Veränderungen der optischen Eigenschaften, die durch Störungen in der Flußzelle (Brechungsindex, Lösungsmittelabsorption, Schlieren, etc.) und durch die Flußzelle selbst verursacht werden, können deshalb durch Referenzbildung nicht erfaßt werden.

Die Probleme, die aus der Abhängigkeit des Brechungsindex von verschiedenen Einflußfaktoren resultieren, lassen sich auf herkömmlichem Wege nur durch komplizierte optische Konstruktionen und meist nur auf Kosten des Lichtdurchsatzes verbessern. Dadurch werden die Nachweisgrenzen negativ beeinflußt.

Weiterhin ist festzustellen, daß wegen des geringeren Lichtdurchsatzes durch die Aufsplittung des optischen Strahlenganges einerseits und wegen der zusätzlichen Rauschquelle durch den Referenzpfad andererseits der Rauschbeitrag des Meßsystems erheblich verschlechtert wird. In Vergleich zu einfacher aufgebauten Meß-Systemen sind nicht nur höhere Kosten zu tragen, sondern es müssen auch eine Reihe von ungünstigen Kompromissen hingenommen werden.

Mittlerweile hat die Technik einen Stand erreicht, bei dem mit einem vertretbarem Aufwand durch konstruktive Maßnahmen kaum weitere Verbesserungen erzielt werden können.

Bisherige Anstrengungen, mittels geeignet erscheinender Rechenalgorithmen Verbesserungen in der Genauigkeit und Nachweisgrenze zu erzielen, haben sich hauptsächlich auf Filteralgorithmen konzentriert, um die statistischen Unsicherheiten, d.h. das Rauschen zu reduzieren. Der Nachteil der Filterung der Daten besteht jedoch darin, daß sich diese in der zeitlichen und/oder der spektralen Auslösung der Signale negativ auswirkt. Außerdem sind weitere Anstrengungen dann nicht mehr sinnvoll, wenn die systematischen Fehleranteile dominieren und die Genauigkeit einschränken.

Es ist demnach eine Aufgabe der Erfindung, ein Verfahren zu schaffen, mit dem es möglich ist, bei Verwendung eines Meßsystems zur Messung von Meßwerten, die von wenigstens zwei Variablen abhängig sind, in einfacher Weise zu genaueren und präziseren Meßergebnissen zu gelangen und/oder die Qualität des Meßsystems zu überwachen.

Diese Aufgabe wird erfindungsgemäß durch die Merkmale des Anspruches 1, insbesondere durch die folgenden Maßnahmen gelöst:

a) Durchführung eines Kalibrationsschritts umfassend:

$a_1$) Stimulierung des Meßsystems durch Veränderung von systematische Meßfehler verursachenden Einflußgrößen und Erfassung der zugehörigen Meßdaten mit Hilfe des Meßsystems;
$a_2$) Ermittlung von systematischen Meßfehlern zugeordneten Effektvektoren aus den in Schritt $a_1$) erfaßten Meßdaten, unter Anwendung eines mathematischen Verfahrens, insbesondere einer Faktoranalyse, wobei die den Meßfehlern zugeordneten Effektvektoren einem mathematischen Modell zu Grunde liegen, mit dem die Meßdaten bis auf einen definierbaren Fehler (Residuum) abschätzbar sind und das wenigstens einen Fehlerterm beinhaltet, der einen einem Meßfehler zugeordneten Effektvektor und einen zugehörigen Fehlerbeitrag umfaßt;

b) Durchführung eines Meßschrittes umfassend:

$b_1$) Erfassung von Meßdaten, die bestimmten Nutzinformationen über den bzw. von dem technischen Prozeß zugeordnet sind, mit Hilfe des Meßsystems, während der technische Prozeß abläuft;
$b_2$) Zerlegung der in Schritt $b_1$) erfaßten Meßdaten in Linearkomponenten, basierend auf den gemäß Schritt $a_2$) ermittelten, den Meßfehlern zugeordneten Effektvektoren, unter Anwendung eines mathematischen Verfahrens, insbesondere einer linearen Regression, zur Ermittlung der Fehlerbeiträge, anhand derer die um systematische Meßfehler bereinigten Nutzinformationen bestimmbar sind.

Bei dem erfindungsgemäßen Verfahren geht es also darum, in einem ersten Kalibrationsschritt die den systematischen Meßfehlern zugeordneten Effektvektoren zu ermitteln, mit deren Hilfe die Eigenschaften der Unzulänglichkeiten des individuellen Meßsystems beschrieben werden können. In diesem Schritt wird das Meßsystem durch Veränderung von systematische Meßfehler verursachenden Einflußgrößen stimuliert und aus den aufgezeichneten Daten werden mittels mathematischer Methoden die abstrakten Effektvektoren ermittelt. Da in der Stimulierung während des Kalibrationszyklusses keine der zu untersuchenden Nutzinformationsträger, beispielsweise bestimmte Substanzen, beteiligt sind, werden die vorliegenden Varianzen der Meßdaten nur von den unerwünschten Effekten als Reaktion auf die Stimulanz verursacht. Dies bedeutet, daß die ermittelten Effektvektoren ausschließlich systematischen Fehlertermen zuordenbar sind.

In einem nachfolgenden Meßschritt, beispielsweise bei analytischen Messungen, werden die einzelnen Nutzinformationsträger, insbesondere die zu analysierenden Substanzen bzw. Substanzgemische, die mit Hilfe von chromatographischen Trennmethoden separiert wurden, einzeln analysiert. Zu jedem Zeitpunkt werden die Meßdaten mit Hilfe mathematischer Methoden, basierend auf den verwendeten Effektvektoren, in Linearkomponenten zerlegt. Dabei werden vorzugsweise mittels multilinearer Regression oder Vektormultiplikation die Fehler-Beiträge, d.h. die Stärken des jeweiligen Fehler-Effektes ermittelt. Mit Hilfe dieser Fehler-Beiträge bzw. Fehler-Koeffizienten lassen sich die um die systematischen Meßfehler bereinigten Nutzinformationen in einfacher Weise bestimmen.

Mit dem erfindungsgemäßen Verfahren können also in besonders einfacher Weise wesentlich genauere und präzisere Meßergebnisse als bisher erzielt werden. Dadurch, daß bei diesem Verfahren das Meßsignal in geeigneter Weise in alle beitragenden Effekte zerlegt wird, kann das Verfahren vorteilhaft für eine Signalanalyse eingesetzt werden. Ferner kann dieses Verfahren auch vorteilhaft zur Diagnose aller Art von Schmutzeffekten, also als Diagnosehilfsmittel zur Überwachung des Meßsystems eingesetzt werden.

Besonders vorteilhafte Anwendungsgebiete für das erfindungsgemäße Verfahren betreffen neben der UVNIS-Absorptionsmeßtechnik unter Verwendung von Diodenarray Detektoren, Diodenarray-Spektralphotometer, auf Gittern basierenden Fluoreszens-Detektoren, die Kernspintechnologie und die Ultraschalltechnologie.

Die Nutzinformationen werden zweckmäßiger Weise aus den um die Fehlerbeiträge bereinigten Meßwerten unter Anwendung von dem mathematischen Modell zu Grunde liegenden mathematischen Algorithmen bestimmt.

Gemäß einer vorteilhaften Ausgestaltung des Verfahrens kann das mathematische Modell bei von zwei Variablen abhängigen Meßdaten, die bestimmte Meßwerte verkörpern, auf der folgenden Gleichung basieren:

$$MW_{a,b} = kn \cdot \sum_{i=1}^{p} NB_{a,i} \cdot NV_{i,b} + kf \cdot \sum_{j=1}^{q} FB_{a,j} \cdot FV_{j,b} + R_{a,b}$$

wobei $Mw_{a,b}$ - ein Meßwert, $NB_{a,i}$ - ein Nutzinformations-Beitrag, und $NV_{i,b}$ - ein einer Nutzinformation zugeordneter Effektvektor, $FB_{a,j}$ - ein Fehler-Beitrag, $FV_{j,b}$ - ein systematischen Meßfehlern zugeordneter Effektvektor, $R_{a,b}$ - ein Residuum und a und b - Variable sind, von denen der Meßwert abhängig ist, sowie p - eine Anzahl von Nutzinformationsträgern und q - eine Anzahl abstrakter Fehlerterme betreffen, und wobei die Skalare kn und kf Skalierungsfaktoren für die Nutzinformations- und Fehlerbeiträge darstellen.

Es versteht sich, daß in dieser und in allen anderen Gleichungen dieses Schutzrechts die Variablen a und b auch vertauscht sein können.

Bei einem als Absorptionsmeßsystem gestalteten chromatographischen Analysensystem, das Meßdaten in Form von Absorptionswerten über der Wellenlänge (Spektren) und über der Zeit (Chromatogramme) generiert, ist es besonders vorteilhaft, wenn das mathematische Modell auf der folgenden Gleichung basiert:

$$MW_{t,\lambda} = d \cdot \sum_{i=1}^{p} c_{t,i} \cdot \varepsilon_{i,\lambda} + \sum_{j=1}^{q} k_{t,j} \cdot Spec_{j,\lambda} + R_{t,\lambda}$$

wobei $MW_{t,\lambda}$ — ein über der Zeit t und der Wellenlänge $\lambda$ veränderlicher Absorptionsmeßwert, d - eine Schichtlänge einer Flußzelle, $c_{t,i}$ — eine über die Zeit veränderliche Konzentration einer Substanz i, d.h. ein Nutzinformations-Beitrag eines eine Nutzinformation charakterisierenden Effektvektors, hier des Extinktionskoeffizienten $\varepsilon_{i,\lambda}$ ist, $k_{t,j}$ - ein über der Zeit veränderlicher Fehler-Beitrag des einem systematischen Meßfehler zugeordneten Effektvektors $Spec_{j,\lambda}$ ist, $R_{t,\lambda}$ — ein Residuum, p-eine Anzahl von Substanzen, die zum Absorptionsspektrum beitragen und q - eine Anzahl von abstrakten Fehlertermen betreffen.

Für denjenigen Fall, daß neben den gemäß Schritt $a_2$) bestimmten abstrakten Effektvektoren, die den systematischen Meßfehlern zugeordnet sind, alle den Nutzinformationen zugeordneten Effektvektoren der Nutzinformationsträger, d.h. die Effektvektoren der Nutzinformationsterme, insbesondere alle Spektren der Substanzen, bekannt sind, kann aus den zeitlichen Verläufen der Nutzinformations-Beiträge in einfacher Weise ein eine Nutzinformation darstellender zeitlicher Konzentrationsverlauf eines Stoffes bestimmt werden und/oder kann mittels bekannter Eichprozeduren eine Substanzmenge bestimmt werden, die ebenfalls eine Nutzinformation darstellt.

Wenn zumindest ein Spektrum einer zu analysierenden Substanz unbekannt ist, also für denjenigen Fall, daß nicht alle Effektvektoren der Nutzinformationsterme bekannt sind, ist zunächst das fehlende Spektrum bzw. der fehlende Effektvektor der interessierenden Substanz zu ermitteln. Hierzu können insbesondere vier Verfahrens-Alternativen eingesetzt werden.

Dabei ist es zunächst zweckmäßig, zu den über die Variable a oder b, beispielsweise der Zeit, gemäß Schritt $b_1$) erfaßten Meßdaten, die Fehler-Beiträge der abstrakten Effektvektoren zu ermitteln, die jeweils einem systematischen Meßfehler zugeordnet sind und die gemäß Schritt $a_2$) bestimmt wurden, wobei diejenigen Werte der Variablen bzw. Zeitpunkte erfaßt werden, zu denen aufgrund eines Effekts bestimmter Nutzinformationsträger, beispielsweise einem Absorptionspeak, das Residuum einen bestimmten Grenzwert übersteigt und nach einem Werte-Intervall bzw. Zeitintervall wieder erreicht, und wobei anschließend die Fehler-Beiträge der abstrakten Effektvektoren, die systematischen Meßfehlern zugeordnet sind, bei diesen Werten der Variablen bzw. zu diesen Zeitpunkten in dem zwischenliegenden Werte-Intervall bzw. Zeitintervall linear interpoliert werden, so daß die um systematische Meßfehler bereinigten Nutzinformationen in diesem Werte-Intervall bzw. Zeitintervall bestimmbar sind.

Gemäß einer ersten Alternative können mit Hilfe von linear interpolierten Fehler-Beiträgen $FB'_{a,j}$ um systematische Meßfehler bereinigte Schätzwerte der wahren Nutzinformation unter Anwendung der folgenden Gleichung ermittelt werden:

$$SW_{a,b} = MW_{a,b} - \sum_{j=1}^{q} FB'_{a,j} \cdot FV_{j,b}$$

wobei $SW_{a,b}$ — ein Schätzwert der Nutzinformation, $MW_{a,b}$ - ein Meßwert, $FB'_{a,j}$ — die über der Zeit linear interpolierten Fehler-Beiträge, $FV_{j,b}$ - ein Effektvektor ist, der systematischen Meßfehlern zugeordnet ist, a und b - Variable sind, von denen der Meßwert abhängig ist, und q - eine Anzahl abstrakter Fehlerterme betreffen. Dieses Verfahren zeichnet sich durch seine Einfachheit aus.

Bei einem als Absorptionsmeßsystem gestalteten chromatographischen Analysensystem, das Meßdaten in Form von Absorptionswerten über der Wellenlänge und über der Zeit generiert, ist zweckmäßig, wenn mit Hilfe von linear interpolierten Fehler-Beiträgen $k'_{t,j}$ um systematische Meßfehler bereinigte Schätzwerte der wahren Absorptionswerte unter Anwendung der folgenden Gleichung ermittelt werden:

$$A_{t,\lambda} = MW_{t,\lambda} - \sum_{j=1}^{q} k'_{t,j} \cdot Spec_{j,\lambda}$$

wobei $A_{t,\lambda}$ - ein Schätzwert der Absorption, $MW_{t,\lambda}$ - ein Messwert, $k'_{t,j}$ - die über der Zeit linear interpolierten Fehler-Beiträge, $Spec_{j,\lambda}$ - ein Effektvektor ist, der systematischen Meßfehlern zugeordnet ist, t und $\lambda$ - die Variablen Wellenlänge und Zeit sind, von denen die gemessenen Absoprtionswerte abhängen, und q - eine Anzahl abstrakter Fehlerterme betreffen, die den Meßwerten überlagert sind.

Gemäß einer zweiten Alternative ist es zweckmäßig, wenn zu den über der Variable a oder b gemäß Schritt $b_1$) erfaßten Meßdaten die Fehler-Beiträge der abstrakten Effektvektoren ermittelt werden, die jeweils einem systematischen Meßfehler zugeordnet sind und die gemäß Schritt $a_2$) bestimmt wurden, wobei zunächst diejenigen Werte der Variablen erfaßt werden, zu denen aufgrund eines Effekts bestimmter Nutzinformationsträger das Residuum einen bestimmten Grenzwert übersteigt und nach einem Werte-Intervall wieder erreicht, und wobei diejenigen Fehler-Beiträge in einem eingeschränkten Bereich ermittelt werden, der einer der Variablen a oder b zugeordnet ist und in dem innerhalb des Werte-Intervalls keine Nutzinformation vorliegt, und wobei mit Hilfe dieser Fehler-Beiträge um systematische Meßfehler bereinigte zugeordnete Schätzwerte der Nutzinformationen in dem Werte-Intervall unter Anwendung der Gleichung gemäß Anspruch 6 im gesamten Bereich der Variable a oder b ermittelt werden.

Bei einem als Absorptionsmeßsystem gestalteten chromatographischen Analysensystem, das Meßdaten in Form von Absorptionswerten über der Wellenlänge und über der Zeit generiert, ist es ferner zweckmäßig, zu den über der Zeit gemäß Schritt $b_1$) erfaßten Meßdaten die Fehler-Beiträge der abstrakten Effektvektoren zu ermitteln, die jeweils einem systematischen Meßfehler zugeordnet sind und die gemäß Schritt $a_2$) bestimmt wurden, wobei zunächst diejenigen Zeitpunkte erfaßt werden, bei denen aufgrund des Effekts eines bestimmten Stoffes, also beim Auftreten eines Absorptionspeaks, das Residuum einen bestimmten Grenzwert übersteigt und nach einem Zeitintervall wieder erreicht, und wobei die Fehler-Beiträge in einem eingeschränkten Wellenlängenbereich ermittelt werden, in dem die zu untersuchende Substanz nicht absorbiert, und wobei anschließend mit Hilfe dieser Fehler-Beiträge um systematische Meßfehler bereinigte Schätzwerte der Absorption in dem Zeitintervall unter Anwendung der Gleichung gemäß Anspruch 7 im gesamten Wellenlängenbereich ermittelt werden.

Bei diesem Verfahren werden also die Koeffizienten der zugehörigen Fehler-Effektvektoren partiell über einen Wellenlängenbereich ermittelt, von dem man weiß, daß die zu untersuchende Substanz nicht absorbiert. Es ist also nur eine Vorinformation darüber erforderlich, in welchem Wellenlängenbereich eine bestimmte Substanz bzw. Substanzklasse absorbiert, während das Spektrum dieser Substanz bzw. Substanzklasse nicht bekannt sein muß. Die Korrektur der unerwünschten Effekte wird dann mittels dieser partiell ermittelten Koeffizienten vorgenommen.

Gemäß einer dritten Verfahrensalternative ist es zweckmäßig, wenn mit Hilfe von linear interpolierten Fehler-Beiträgen FB' an einer Stelle $a_i$, bei der das Residuum einen Maximalwert erreicht, ein der Nutzinformation des den Effekt verursachenden Nutzinformationsträgers i zugeordneter Effektvektor unter Anwendung der folgenden Gleichung ermittelt wird

$$NV_{i,b} = MW_{a_i,b} - \sum_{j=1}^{q} FB'_{a_i,j} \cdot FV_{j,b}$$

wobei $NV_{i,b}$ - der Effektvektor des Nutzinformationsträgers i , $MW_{ai,b}$ - der Meßwert, $FB'_{ai,j}$ - die linear interpolierten Fehler-Beiträge, $FV_{j,b}$ - der den systematischen Meßfehlern zugeordnete Effektvektor sowie a und b - Variablen sind, von denen der Meßwert abhängig ist, und wobei der so ermittelte, den Nutzinformationen des Nutzinformationsträgers zugeordnete Effektvektor zu den gemäß Schritt $a_2$) ermittelten, den systematischen Meßfehlern zugeordneten abstrakten Effektvektoren hinzugefügt und nachfolgend für alle Effektvektoren (Nutzinformation und Fehler) unter Anwendung eines mathematischen Verfahrens, insbesondere einer linearen Regression, deren Effektvektor-Beiträge ermittelt werden, anhand derer die Nutzinformationen und die systematischen Fehleranteile bestimmbar sind. Diese Verfahrensalternative geht davon aus, daß zu jedem Zeitpunkt nur ein Nutzinformationsträger zu dem gemessenen Meßwert beiträgt.

Bei einem als Absorptionsmeßsystem gestalteten chromatographischen Analysensystem, das Meßdaten in Form von Absorptionswerten über der Wellenlänge und über der Zeit generiert, ist es besonders vorteilhaft, wenn mit Hilfe von linear interpolierten Fehler-Beiträgen $k'_{tx,j}$ zu einem Zeitpunkt $t_x$, bei der das Residuum einen Maximalwert erreicht, ein Spektrum des den Effekt (Peak) verursachenden Stoffes unter Anwendung der folgenden Gleichung ermittelt wird:

$$\varepsilon_{x,\lambda} = MW_{t_x,\lambda} - \sum_{j=1}^{q} k'_{t_x,j} \cdot Spec_{j,\lambda}$$

wobei $\varepsilon_{x,\lambda}$— das Spektrum des den Effekt verursachenden Stoffes *x*, $MW_{t_x,\lambda}$— das Absorptionsspektrum zum Zeitpunkt $t_x$ über der Wellenlänge $\lambda$ ist, $k'_{tx,j}$-die zum Zeitpunkt $t_x$ ermittelten Fehler-Beiträge der j abstrakten Effektvektoren $Spec_{j,\lambda}$ über der Wellenlänge $\lambda$ ist, und wobei das so ermittelte Spektrum zu dem gemäß Schritt $a_2$) ermittelten, den systematischen Meßfehlen zugeordneten abstrakten Effektvektoren hinzugefügt und nachfolgend für alle Effektvektoren unter Anwendung eines mathematischen Verfahrens, insbesondere einer linearen Regression, deren Effektvektor-Beiträge k" ermittelt werden, anhand derer die Nutzinformationen und die Fehlerterme bestimmbar sind.

Bei diesem Verfahren werden also die Koeffizienten k' der Effekte an der Stelle mit der maximalen nicht erklärten Abweichung durch Interpolation ermittelt. Dann wird das unbekannte Substanzspektrum $\varepsilon_{x,\lambda}$ durch die Korrektur der Effekte ermittelt und dieses Spektrum in das Model der multi-linearen Regression aufgenommen und die Regressionsrechnung über dem Peak wiederholt. Dadurch läßt sich der korrekte Koeffizientenverlauf $k''_{t,i}$ (relative Konzentration) der unbekannten Substanz und der Fehler-Effektvektoren ermitteln.

Gemäß einer vierten, bevorzugten Verfahrensalternative, ist es zweckmäßig, wenn innerhalb des Werte-Intervalls bzw. Zeitintervalls, in welchem das Residuum, verursacht durch die Überlagerung von zum Teil mehreren Nutzinformationsträgern, einen bestimmten Grenzwert übersteigt und nach einem Werte-Intervall bzw. Zeitintervall wieder erreicht, alle Nutzinformations-Beiträge und alle systematischen Fehlerbeiträge, die zu den jeweiligen Meßwerten beitragen, bestimmt werden. Dabei werden zunächst mit Hilfe der linear interpolierten Fehlerbeiträge FB' bzw. k' die um systematische Meßfehler bereinigten Schätzwerte der wahren Nutzinformation ermittelt. Anschließend werden mit Hilfe eines mathematischen Verfahrens, beispielsweise der Multikomponentenanalyse, die den Nutzinformationen zugeordneten Effektvektoren aller beteiligten Nutzinformationsträger berechnet. Diese werden nachfolgend den systematischen Meßfehlern zugeordneten Fehler-Effektvektoren hinzugefügt und es werden für alle Effektvektoren unter Anwendung eines mathematischen Verfahrens, insbesondere einer multi-linearen Regression, deren Effektvektor-Beiträge $k''_{t,j}$ ermittelt, anhand derer die Nutzinformationen und die systematischen Meßfehler bestimmbar sind.

Dieses Verfahren liefert die präzisesten Ergebnisse und bietet den zusätzlichen Vorteil, daß auch für nicht getrennte Substanzen durch Aufnahme von zusätzlichen Spektren in das multi-lineare Regressionsmodell die zeitlichen Koeffizientenverläufe nicht vollständig getrennter Peaks berechnet werden können. In diesem Falle werden zweckmäßiger Weise die Spektren wenigstens zu Beginn des Peaks, am Peakmaximum und am Ende des Peaks erfaßt. Die Spektren, die in das multilineare Regressionmodell aufzunehmen sind, werden mit bekannten Verfahren, beispielsweise mit einer Multikomponentenanalyse, bestimmt.

Die wahren Nutzinformationsterme lassen sich schließlich mit Hilfe von Effektvektor-Beiträgen unter Anwendung der folgenden Gleichung ermitteln:

$$SW_{a,b,i} = NB'_{a,i} \cdot NV_{i,b}$$

wobei $SW_{a,b,i}$ - die von den Variablen a und b abhängigen wahren Schätzwerte der Nutzinformation des Nutzinformationsträgers i, $NB'_{a,i}$ - die Effektvektor-Beiträge und $Nv_{i,b}$ - der Effektvektor des Nutzinformationsträgers i sind.

Bei einem als Absorptionsmeßsystem gestalteten chromatographischen Analysensystems, das Meßdaten in Form von Absorptionswerten über der Wellenlänge und über der Zeit generiert, ist es besonders vorteilhaft, die Schätzwerte der wahren Absorption des den Effekt (Peak) verursachenden Stoffes x mit Hilfe der durch die multi-lineare Regression errechneten Effektvektor-Beiträge k" unter Anwendung der folgenden Gleichung ermittelt werden:

$$A_{t,\lambda,x} = k''_{t,x} \cdot \varepsilon_{x,\lambda}$$

wobei $A_{t,\lambda,x}$ die von den Variablen t und λ abhängigen wahren Schätzwerte der Nutzinformation des Stoffes x, $k''_{t,x}$ - die Effektvektor-Beiträge und $\varepsilon_{x,\lambda}$ -das Spektrum des Stoffes x sind.

Anhand der Schätzwerte der wahren Nutzinformation, beispielsweise der wahren Absorptionswerte, kann auch vorteilhaft eine Plausibilitätsprüfung des verwendeten mathematischen Modells durchgeführt werden, indem die berechneten Schätzwerte mit bekannten Werten verglichen werden.

Die Erfindung betrifft auch eine Vorrichtung zur Durchführung des Verfahrens nach einem der Ansprüche 1 bis 14, zur Bearbeitung von Meßdaten, die unter Verwendung eines Meßsystems, insbesondere eines chromatographischen Analysensystems, zur Messung von Meßwerten meßbar sind, die bestimmten Nutzinformationen über bzw. von einem technischen Prozeß zugeordnet sind und die von wenigstens zwei Variablen abhängig sind, wobei mit dem Meßsystem eine Recheneinrichtung zur Ermittlung von Rechenwerten aus den Meßdaten und zur Weiterverarbeitung derselben gekoppelt ist,
gekennzeichnet durch die folgenden Schritte:

    a) Durchführung eines Kalibrationsschritts umfassend:

        $a_1$) Stimulierung des Meßsystems durch Veränderung von systematische Meßfehler verursachenden Einflußgrößen und Erfassung der zugehörigen Meßdaten mit Hilfe des Meßsystems;
        $a_2$) Ermittlung von systematischen Meßfehlern zugeordneten Effektvektoren aus den in Schritt $a_1$) erfaßten Meßdaten mit Hilfe der Recheneinrichtung, unter Anwendung eines mathematischen Verfahrens, insbesondere einer Faktoranalyse, wobei die den Meßfehlern zugeordneten Effektvektoren einem mathematischen Modell zu Grunde liegen, mit dem die Meßdaten zumindest annähernd abschätzbar sind und das wenigstens einen Fehlerterm beinhaltet, der einen einem Meßfehler zugeordneten Effektvektor und einen zugehörigen Fehlerbeitrag umfaßt;

    b) Durchführung eines Meßschritts umfassend:

        $b_1$) Erfassung von Meßdaten, die bestimmten Nutzinformationen über den bzw. von dem technischen Prozeß zugeordnet sind, mit Hilfe des Meßsystems, während der technische Prozeß abläuft;
        $b_2$) Zerlegung der in Schritt $b_1$) erfaßten Meßdaten in Linearkomponenten, basierend auf den gemäß Schritt $a_2$) ermittelten, den Meßfehlern zugeordneten Effektvektoren mit Hilfe der Recheneinrichtung, unter Anwendung eines mathematischen Verfahrens, insbesondere einer linearen Regression, zur Ermittlung der Fehlerbeiträge, anhand derer die um systematische Meßfehler bereinigten Nutzinformationen bestimmbar sind.

Es versteht sich, daß die vorgenannte Vorrichtung dazu bestimmt ist bzw. derart gestaltet ist, daß das Verfahren gemäß einer oder mehrerer der Ansprüche 1 bis 14 auch in beliebig möglichen Kombinationen vorteilhaft durchführbar ist bzw. durchgeführt wird.

Weitere Vorteile, Merkmale und Gesichtspunkte der Erfindung sind dem nachfolgenden Textteil entnehmbar, in dem ein bevorzugtes Ausführungsbeispiel der Erfindung anhand der Figuren beschrieben ist.

Es zeigen:

Fig. 1:    ein Blockdiagramm eines Meßsystems nach dem Stand der Technik, wie es insbesondere bei einem Absorptionsmeßsystem zur Durchführung einer chromatographischen Analyse eingesetzt wird;

Fig. 2: eine graphische Darstellung von Meßdaten, die bei einer chromatographischen Analyse gewonnen wurden, wobei die Absorptionsdaten für unterschiedliche Wellenlängen und über der Zeit sowie ein zugehöriger Verlauf einer Lösungsmittelzusammensetzung eines Lösungsmittel-Gradienten dargestellt sind;

Fig. 3: eine graphische Darstellung von erfindungsgemäß ermittelten Schätzwerten der Absorptionswerte für unterschiedliche Wellenlängen über der Zeit;

Fig. 4: eine graphische Darstellung von Rauschbeiträgen vor und nach Anwendung des erfindungsgemäßen Verfahrens.

Das erfindungsgemäße Verfahren kann vorteilhaft zur Bearbeitung von Meßdaten eingesetzt werden, die unter Verwendung eines chromatographischen Analysensystems ermittelt werden, wobei die Meßdaten bestimmten Absorptionswerten zugeordnet sind. Diese Absorptionswerte stellen Nutzinformationen über bzw. von einem technischen Prozeß dar, bei dem es sich hier um eine chromatographische Stoffanalyse handelt.

1. Meßsystem

Als Meßsystem 10 wird bei einer chromatographischen Analyse üblicher Weise ein Absorptionsmeßsystem 20 mit einem Diodenarry-Sensor 26 eingesetzt. Mit Hilfe des Diodenarray-Sensors 26 können die Absorptionswerte der zu analysierenden Stoffe für bestimmte Meßwellenlängen über der Zeit ermittelt werden.

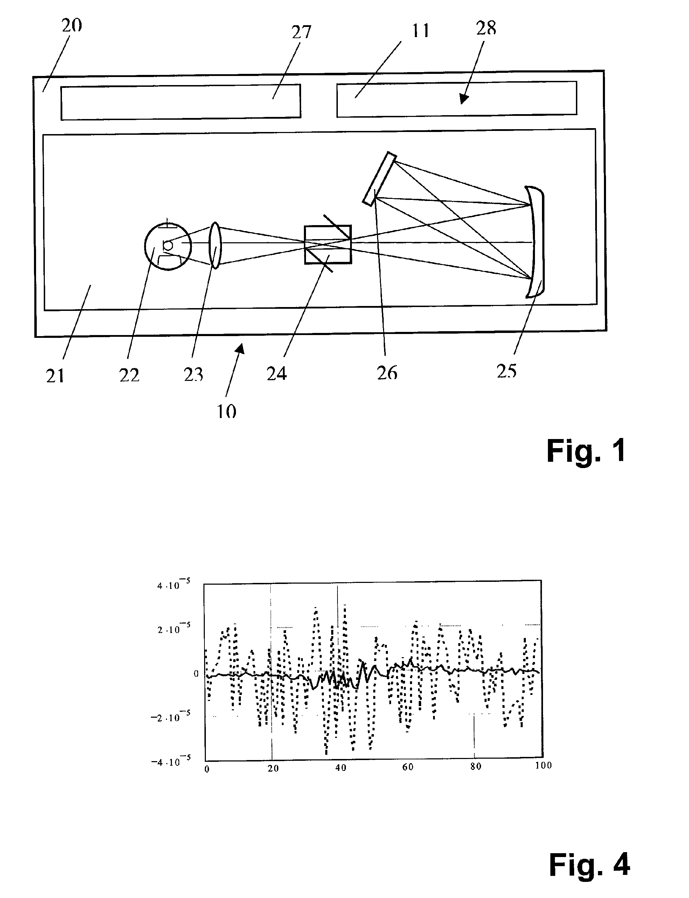

Der Aufbau eines derartigen Absorptionsmeßsystems 20 ist aus dem in Figur 1 dargestellten Blockdiagramm ersichtlich. Die optische Einheit 21 des Absorptionsmeßsystems 20 umfaßt als wesentliche Elemente eine Lichtquelle 22, eine Linse oder ein Linsensystem 23, eine Flußzelle 24, ein Gitter 25 und einen Diodenarray-Sensor 26. Das Absorptionsmeßsystem 20 wird von einer Energiequelle 27 mit elektrischer Energie versorgt und die Meßdaten können mit Hilfe einer Elektronik 28 erfaßt, gespeichert und ausgewertet werden. Dementsprechend sind mit dem Absorptionsmeßsystem 20 eine Recheneinrichtung 11 und vorzugsweise eine Speicher-, Darstellungs- und/oder Auswerteeinrichtungen gekoppelt.

Als Lichtquelle 22 wird üblicher Weise eine elektrisch betriebene Gasentladungslampe eingesetzt. Es versteht sich jedoch, daß auch andere Lichtquellen, beispielsweise Leuchtdioden eingesetzt werden können. Die Lichtquelle 22 strahlt Licht mit unterschiedlichen Wellenlängen ab. Das Licht wird mit Hilfe einer Strahlformungseinrichtung, hier einer Linse 23, in eine Flußzelle 24 abgebildet, die von einem Fluid durchströmt wird, das die zu analysierenden Stoffe bzw. Stoffgemische enthalten kann. Das aus der Flußzelle 24 austretende Licht trifft auf ein dispersives optisches Bauteil, beispielsweise ein Gitter 25, das das Licht in seine spektralen Anteile aufteilt und auf den Diodenarray-Sensor 26 abbildet.

Da einerseits auf jede einzelne Photodiode des Diodenarray-Sensors 26 nur Licht einer bestimmten Wellenlänge auftrifft und andererseits die notwendige Meßzeit für die Erfassung eines Meßwertes sehr kurz ist (einige Millisekunden), können mit Hilfe des Diodenarray-Sensors 26 die Absorptionswerte des zu analysierenden Stoffes bzw. Stoffgemisches wellenlängen- und zeitaufgelöst erfaßt werden.

2. Struktur der Meßdaten

Die mittels des Absorptionsmeßsystems 20 erfaßten Meßdaten in Form von Absorptionswerten einer chromatographischen Analyse sind von wenigstens zwei Variablen abhängig, und zwar von der Wellenlänge (Spektren) und von der Zeit (Chromatogramme). Folglich wird eine zweidimensionale Datenstruktur erzielt, die in Matrixform wie folgt dargestellt werden kann:

Die Spektren sind in den Reihen bzw. Zeilen angeordnet und die chromatographischen Signale in den Spalten der Matrix.

3. Modellbildung

Erfindungsgemäß wird die Annahme getroffen, daß diese Meßdaten als eine lineare Überlagerung von mehreren Einzelinformationen aufgefaßt werden können, und zwar betreffend Nutzinformationen (den wahren Absorptionswerten), systembedingte Fehlerterme und statistische Unsicherheiten.

Betrachtet man aus der Datenmatrix zunächst nur ein Spektrum zu einem beliebigen Zeitpunkt $t_x$, dann setzt sich der spektrale Verlauf dieser Meßwerte aus dem Spektrum der zu untersuchenden Substanz, den Beiträgen systembedingter Fehlerterme und dem Rauschen zusammen. Anstelle einer Substanz kann auch eine probendedingte Verunreinigung vorliegen.

Die Nutzinformation einer Mischung aus mehreren Substanzen berechnet sich aus der Addition der Einzelbeiträge der jeweiligen Substanzen. Gleiches gilt für die systematischen Fehlerterme. Auch diese Beiträge sind als Summe mehrerer unabhängiger Einzelbeiträge zu verstehen.

Ein Spektrum einer Substanz ist nach dem Lambert-Beer'schen Gesetz definiert als das Produkt aus der spektralen Charakteristik (Extinktion $\varepsilon_\lambda$), der Wirkungslänge der Absorption (Schichtlänge der Flusszelle d) und der Konzentration c der Substanz.

$$A_\lambda = d \cdot c \cdot \varepsilon_\lambda$$

oder für Substanzgemische

$$A_\lambda = \sum_{i=1}^{p} A_{\lambda,i} = d \cdot \sum_{i=1}^{p} c_i \cdot \varepsilon_{i,\lambda}$$

wobei $A_{\lambda,i}$ - das Absorptionsspektrum der i-ten Substanz, $\varepsilon_{i,\lambda}$ - der Extinktionskoeffizient der Substanz i, d - die Schichtlänge der Flußzelle 24, $c_i$ - die Konzentration der i-ten Substanz und p - die Anzahl der Substanzen, die zum Absorptionsspektrum beitragen sind.

Die Beiträge ErrSys $_\lambda$ der die systematischen Meßfehler enthaltenden Fehlerterme können in ähnlicher Weise als Summe der Produkte aus der spektralen Charakteristik Spec $_{j,\lambda}$ des jeweiligen Fehlerterms und einer zugehörigen Stärke bzw. einem zugehörigen Fehler-Beitrag $k_j$ beschrieben werden:

$$ErrSys_\lambda = \sum_{j=1}^{q} k_j \cdot Spec_{j,\lambda}$$

wobei $\lambda$ - die Wellenlänge ist und q — eine Anzahl von abstrakten Fehlertermen.

Zu jedem Zeitpunkt t kann nun ein gemessenes Spektrum allgemein beschrieben werden durch die Summe der Absorptionsbeiträge der vorhandenen Substanzen und der Summe der Einzelfehlerbeiträge.

$$MW_\lambda = d \cdot \sum_{i=1}^{p} c_i \cdot \varepsilon_{i,\lambda} + \sum_{j=1}^{q} k_j \cdot Spec_{j,\lambda} + R_\lambda$$

wobei $MW_\lambda$ - ein über der Wellenlänge $\lambda$ veränderlicher Absorptionsmeßwert, d-eine Schichtlänge einer Flußzelle, $c_i$ - eine Konzentration einer Substanz i, d.h. ein Nutzinformations-Beitrag eines eine Nutzinformation charakterisierenden Effektvektors, hier des Extinktionskoeffizienten $\varepsilon_{i,\lambda}$, $k_j$ - ein Fehler-Beitrag des einem systematischen Meßfehler zugeordneten Effektvektors Spec $_{j,\lambda}$, $R_\lambda$ - ein Residuum, p-eine Anzahl von Substanzen, die zum Absorptionsspektrum beitragen und q - eine Anzahl von abstrakten Fehlertermen darstellen.

Oder allgemein ausgedrückt

$$MW_\lambda = \sum_{i=1}^{p+q} Coef_i \cdot Spectr_{i,\lambda} + R_\lambda$$

Unter Einbeziehung der Zeitkomponente ergibt sich:

$$MW_{t,\lambda} = \sum_{i=1}^{p+q} Coef_{t,i} \cdot Spectr_{i,\lambda} + R_{t,\lambda}$$

Als zeitabhängige Größen treten hier nur die Koeffizientenverläufe $Coef_{t,j}$ als Maß für die Stärke der jeweiligen Einzelbeiträge in Erscheinung. In dieser Betrachtungsweise verstehen sich die Meßdaten $MW_{t,\lambda}$ als Linearkomponenten bestehend aus den einzelnen spektralen Charakteristiken $Spectr_{i,\lambda}$ sowohl als Eigenschaft der Nutzinformation als auch der systematischen Fehler, gewichtet mit deren zugehörigen Stärken $Coef_{t,i}$.

Für den Fall, daß die spektralen Charakteristiken aller Terme bekannt sind, können mit Hilfe mathematischer Methoden die Koeffizienten $Coef_{t,i}$ und damit die Einzelbeiträge der Terme am Meßergebnis für jeden Zeitpunk während der Analyse ermittelt werden.

Erfindungsgemäß ist vorgesehen, die spektralen Charakteristiken $Spec_{i,\lambda}$ aller denkbaren systembedingten systematischen Fehlerterme des Meß-Systemes in einem Kalibrationszyklus zu erfassen. In den folgenden Analyse-Runs werden diese für die Linearkomponentenzerlegung der gemessenen Daten verwendet. Nach der Linearkomponentenzerlegung der gemessenen Daten können für jeden Zeitpunkt die unerwünschten Beiträge, die auf systematische Fehler zurückzuführen sind, von den Meßdaten eliminiert werden oder als Einzelbeiträge dargestellt werden.

## 4. Stimulierung des Meßsystems

Um die spektrale Charakteristik der einzelnen Fehlerterme bestimmen zu können, wird während eines Kalibrationszykluses das Meß-System in geeigneter Weise stimuliert, das heißt es werden systematische Meßfehler verursachende Einflußgrößen gezielt verändert und die zugehörigen Meßdaten mit Hilfe des Meßsystems 10 erfaßt und zweckmäßiger Weise in einer Speichereinrichtung (Elektronik 28) abgespeichert. Da während des Kalibrationszykluses bewußt keine Nutzinformationen vorliegen, beziehen sich die Meßdaten nur auf die unerwünschten Effekte (Fehler + Lösungsmittelabsorption). Unter dem Begriff Fehler-Effektvektoren bzw. den systematischen Meßfehlern zugeordneten Effektvektoren sind die spektralen Charakteristiken der Fehlerterme zu verstehen.

Die Anforderungen an die Art und den Verlauf der individuellen Stimulierung des Meß-Systems ergeben sich aus den vorliegenden System-Unzulänglichkeiten und den erwarteten Meß- und Umgebungsbedingungen. Die wesentlichen Systemunzulänglichkeiten betreffen im vorliegenden Fall den Bereich der Lichtquelle 22, die Empfindlichkeit des Meßsystems 10 auf Schwankungen der Umgebungstemperatur und den Bereich der Flußzelle 24 mit den auftretenden Variationen des Brechungsindex, sowie Lösungsmittelabsorption.

## Einflußgröße Umgebungstemperatur

Die Schwankungen der Umgebungstemperatur können beispielsweise dadurch nachgebildet werden, daß in den Kühlluftstrom ein Heizelement eingebaut wird. Während des Kalibrationszyklusses werden bestimmte Temperaturänderungen eingestellt und die Reaktionen des Meß-Systems auf diese Änderungen, das heißt die Meßdaten, werden zur anschließenden Auswertung aufgezeichnet. Da die Auswirkung von der zeitlichen Ausbreitung der Temperatur abhängt, werden die Daten über ein bestimmtes Zeit-Intervall aufgenommen. Es ist ebenfalls denkbar, die Temperaturabhängigkeit dadurch zu ermitteln, daß Driftdaten während der Aufwärmphase des Meßinstrumentes aufgezeichnet werden. Allerdings gelten in diesem Falle nur angenäherte Verhältnisse, so daß nur eine eingeschränkte Genauigkeit der Ergebnisse zu erwarten ist. Aus den Meßdaten, die als Reaktion auf diese Stimulanz vorliegen, können die temperaturabhängigen Effektvektoren ermittelt werden.

## Einflußgröße Lichtquelle

Von einer Deuterium-Gasentladungslampe ist bekannt, daß die Stabilität des Plasmas nicht nur von der Stabilität der Stromversorgung abhängt, sondern ebenso von den Variationen des Plasmas durch räumliche Ausdehnung. Solche räumlichen Änderungen des Plasmas werden durch physikalische Vorgänge bei der Gasentladung in der Lampe verursacht. Diese Eigenschaften der Lichtquelle wirken sich, abhängig vom optischen Aufbau des Beleuchtungssystems, in mehreren spektralen Fehler-Effektvektoren aus.

Um diese Fehler-Effektvektoren zu ermitteln, kann das System zunächst dadurch stimuliert werden, daß die Instabilitäten der Stromversorgung durch gezielte Variation des Lampenstromes nachgebildet werden. Die Gasentladungslampen werden zu diesem Zwecke derart betrieben, daß nach einem Zündvorgang das Plasma durch einen konstanten geregelten Anodenstrom stabilisiert wird. Die sich im Betrieb einstellende Brennspannung hängt von einer Reihe von Einflußfaktoren ab:

- Abstand zwischen Anode und Kathode
- Beschaffenheit der Kathode in Material und Form
- Ausprägung und Gleichförmigkeit des Elektronen emittierenden Kathodenmaterials
- Ablagerungen von Materialien an den Wänden des Lampenkolbens
- Temperatur

Ein Teil der oben beschriebenen Einflußfaktoren hängt von der Konstruktion bzw. dem Aufbau der Gasentladungslampe ab, aber es gibt auch Einflußfaktoren, die sich erst über der Zeit auswirken. Zu diesen Einflußfaktoren zählen insbesondere Ermüdungserscheinungen des Kathodenmaterials. Dies kann zur Folge haben, daß sich die Brennspannung stetig oder teilweise sprunghaft verändert, wodurch sich die Leistungaufnahme der Lampe und damit auch die Intensität der Strahlung ändern kann. Außerdem hat eine Temperaturänderung eine Veränderung der Lichtintensität zur Folge. Die spektrale Charakteristik einer Intensitätsänderung der Lampe durch Änderung der Leistungsaufnahme wird durch gezielte Variation des Lampenstromes angeregt.

Eine zusätzliche Stimulation betrifft die Nachbildung der räumlichen Bewegungen des Plasmas der Gasentladungslampe. Hierzu wird die optische Achse bzw. der

Strahlengang in geeigneter Weise räumlich versetzt und die Reaktion des Meß-Systems daraufhin erfaßt. Definierte Versätze des Lichtstrahles in X-, Y- und Z-Richtung können mit Hilfe einer taumelnden Platte in dem optischen Strahlengang realisiert werden. Zweckmäßiger Weise wird zur Auslenkung der optischen Achse durch parallelen Strahlenversatz eine planparallele Platte in den optischen Strahlengang eingefügt. Die Lage dieser Platte kann in zwei Rotationsebenen verändert werden. Auf diese Weise können parallele Strahlenversätze mit der gewünschten Auslenkung in X- und in Y-Richtung realisiert werden.

Einflußgrößen Brechungsindex und Lösungsmittelabsorption

Die spektralen Charakteristiken, die durch physikalische Vorgänge in der Flußzelle 24 begründet sind, werden durch Absorption des Lösungsmittels, durch statische und dynamische Brechungsindexvariationen, durch sich ausbildende Strömungsprofile, oder durch Schlierenbildung verursacht. Damit liegt nahe, daß die Fehler-Effektvektoren durch Stimulanz dieser Einflußgrößen ermittelt werden können.

Der Brechungsindex ist eine lösungsmittel- bzw. substanzspezifische Eigenschaft und beschreibt die optische Dichte des Mediums. Der Brechungsindex wirkt sich zum einen rein statisch auf die optischen Eigenschaften des Meß-Systems aus und zum anderen gibt es dynamische Vorgänge in einer Flußzelle, die lokale Brechungsindexvariationen durch Lösungsmittel- und Konzentrationsunterschiede verursachen. Ähnlich wirken sich Druck- und Temperaturstörungen auf die optischen Eigenschaften aus. Diese ursächlichen Einflußgrößen müssen in der Stimulanzbildung vertreten sein, damit entsprechende Effektvektoren generiert werden können. Dies läßt sich durch Variation der Lösungsmittelzusammensetzung und durch Änderungen der Flußrate über den in der Applikation geforderten Bereich erreichen.

Spätestens hier wird jedoch deutlich, daß eine unabhängige Stimulanz der genannten Einflußgrößen nur schwerlich möglich ist. Denn in der praktischen Anwendung werden durch die Veränderung einer Größe andere Größen mit beeinflußt. Folglich können die Einzelbeiträge nur in Kombination mit anderen Einzelbeiträgen ermittelt werden.

Geht man davon aus, daß sich die Anteile der einzelnen Einflußgrößen in ihrer Wirkung unabhängig überlagern, können mit Hilfe geeigneter mathematischer Methoden die Effektvektoren dennoch ermittelt werden.

5. Verfahren zur Ermittlung der Fehler-Effektvektoren

Als mathematische Methoden zur Extraktion der Effektvektoren eignen sich unter anderem die in der multivariaten Datenanalyse bekannten Verfahren der Faktoranalyse. Die Hauptanwendung faktoranalytischer Techniken ist die Reduktion der Variablen (Effektvektoren) und die Aufdeckung von Strukturen in der Beziehung der Variablen zueinander. Das Verfahren der Faktoranalyse ist in die Thematik der Eigenwertprobleme einzuordnen. Hinsichtlich der Faktoranalyse gibt es eine Vielzahl unterschiedlicher Algorithmen und Bezeichnungen, die je nach Ursprung und Anwendungsbereich unterschiedlich benannt werden. Hierzu gehören:

- Hauptkomponentenanalyse
- Hauptachsenanalyse
- Prinzipale Komponenten Analyse bzw. Prinzipale Komponenten Regression
- Singulärwertzerlegung, etc.

Solche Verfahren können angewandt werden, um mit Hilfe der Recheneinrichtung 10 aus den Meßdaten, die während des Kalibrations-Zykluses durch Stimulanz des Meß-Systems mit den entsprechenden Einflußparametern aufgenommen wurden, die entsprechenden abstrakten Effektvektoren zu ermitteln.

Ein Ziel des vorgeschlagenen Verfahrens ist es, aus der Vielzahl der Daten aus dem Kalibrationszyklus mit Hilfe von faktoranalytischen Methoden die Anzahl der beschreibenden Fehler-Effektvektoren zu reduzieren und ein Modell zu entwickeln mit dem die Eigenschaften des Systems mit der geforderten Genauigkeit in Form einer begrenzten Anzahl von abstrakten Fehler-Effektvektoren Spec$_{j,\lambda}$ und deren zugehörigen Gewichtungen bzw. Fehler-Beiträgen k$_j$ beschrieben werden können.

Ein Verfahren, das sich zu diesem Zecke als besonders günstig erwiesen hat, ist das Verfahren der Singulärwertzerlegung (SVD - singular value decomposition). Die Methode der Singulärwertzerlegung liefert als Ergebnis eine zusammengesetzte Matrix bestehend aus drei Matrizen.

**Singular Value Decomposition**
Singulärwertzerlegung

$$M \; = \; U*\Lambda*V^{T}$$

**Loadings** (V-Matrix): Enthält die abstrakten spektralen Effekt-Vektoren

**Scores** (U-Matrix): Enthält die zugehörigen Coeffizientenverläufe

**Singular values:**
Erklären die Varianzen in den Daten , die durch die zugehörigen Eigenvektoren repräsentiert werden. Aus diesen Werten läßt sich ableiten, durch wieviele Vektoren die Daten hinreichend genau repräsentiert werden können

wobei M - eine Ausgangs-Datenmatrix von Meßdaten, als Systemantwort auf die Stimulanz während des Kalibrationszyklusses darstellt, U - die zugehörigen Koeffizientenverläufe (Scores) sind, V - abstrakte spektrale Effekt-Vektoren (Loadings) sind und $\Lambda$ - eine Diagonal-Matrix ist, welche die Quadratwurzeln der Eigenwerte von M$^{T}$*M enthält.

Die Faktorladungen (Loadings) repräsentieren in abstrakter Form den Zusammenhang in der Gesamtheit der gemessenen Kalibrationsdaten. In dem Verfahren der Singulärwertzerlegung (SVD) werden sequentiell die Faktorladungen entsprechend ihren Beiträgen zur Varianz in den Daten bestimmt. Liegen aus dem Kalibrationslauf bedingt durch die beaufschlagten Stimulanzen *n* Spektren vor, liefert das SVD-Verfahren ebenfalls *n* abstrakte spektrale Effekt-Vektoren. Da allerdings davon ausgegangen werden kann, daß weniger Einflußgrößen (Fehlerterme) das Systemverhalten bestimmen, genügen weitaus weniger Faktorladungen (Effektvektoren), um das Verhalten des Systems zu beschreiben. Mit einem Modell, bestehend aus einer reduzierten Anzahl von abstrakten Effekt-Vektoren, lassen sich mit ausreichender Genauigkeit die Meßdaten mit beliebigem Zeitverlauf rekonstruieren.

Die Anzahl der auszuwählenden abstrakten Fehler-Effektvektoren, die notwendig sind, um die Meßdaten mit der geforderten Genauigkeit rekonstruieren zu können, lassen sich aus den Singulärwerten ableiten. Ihre Werte sind ein Maß dafür, mit welchem Anteil der zugehörige Effekt-Vektor zur Varianz in den Daten beiträgt.

Dies kann anhand eines Beispiels verdeutlicht werden. Dabei wird angenommen, daß die Betriebstemperatur des Meß-Systems zwei Auswirkungen auf das optische System verursacht; eine in X- und eine in Y-Richtung orientierte thermische Ausdehnung, die jedoch jeweils unterschiedliche spektrale Abweichungen bewirken. Ändert man nun in einem Kalibrierungslauf nur die Temperatur und zeichnet als Systemantwort über der Zeit eine Vielzahl von *n* Spektren auf, die man einer Singulärwertzerlegung zuführt, dann erhält man als Ergebnis zwar *n* abstrakte spektrale Vektoren, aber nur zwei davon tragen signifikant zur Varianz in den Daten bei. Dies wird aus den ermittelten Singulärwerten sichtbar, die mit den Eigenwerten der Eigenvektoren vergleichbar sind. Aus den Werten der Singulärwerte der abstrakten Effekt-Vektoren kann dann abgeleitet werden, daß die ersten beiden Vertreter mit großen Werten besetzt sind, während die anderen Effekt-Vektoren nur in Form von Rauschen zur Varianz beitragen.

Dadurch bedingt ist auch eine Möglichkeit gegeben, das statistische Rauschen weitgehend zu eliminieren, indem die nicht signifikant zur Varianz der der Meßdaten beitragenden spektralen Vektoren in der Modellbildung ausgeschlossen werden.

Die Modellbildung der systematischen Einflußgrößen wird um so besser, je größer die spektralen Vektoren sind, also umso höher die Anzahl der Datenpunkte pro Spektrum sind und je mehr Spektren aus dem Kalibrationszyklus vorliegen.

6. Meßschritt

Wie vorstehend beschrieben, wird erfindungsgemäß zunächst das Meß-System 10 mit geeigneten Einflußgrößen stimuliert und aus den aufgezeichneten Daten werden mittels mathematischer Methoden mit Hilfe der Recheneinrichtung 11 die abstrakten Effektvektoren ermittelt, mit deren Hilfe die Eigenschaften der unerwünschten Unzulänglichkeiten des individuellen Systems beschrieben werden können.

Nach diesem Kalibrationsschritt bzw- zyklus, werden nachfolgend analytische Messungen durchgeführt. Hierzu werden die einzelnen Substanzen der zu untersuchenden Proben (Substanzgemische), die mit Hilfe von chromatographischen Trennmethoden separiert wurden, einzeln analysiert. Zu jedem Zeitpunkt werden die Meßdaten (Spektren) mit Hilfe mathematischer Methoden, basierend auf den verwendeten abstrakten Fehler-Effektvektoren mit Hilfe der Recheneinrichtung 11, in Linearkomponenten zerlegt. Das heißt, es werden fortlaufend, vorzugsweise mittels multilinearer Regression, die Koeffizienten bzw. Fehler-Beiträge, also die Stärke der jeweiligen Effekte ermittelt, während die chromatographische Analyse durchgeführt wird, mithin während die Absorptionsdaten über der Wellenlänge und über der Zeit erfaßt werden.

In demjenigen Fall, daß zu einem gegebenem Zeitpunkt keine unbekannte Substanz vorliegt, können die gemessenen Spektren vollständig durch die Koeffizienten der Effektvektoren erklärt werden, also durch die Fehler-Beiträge und durch die Koeffizienten von bekannten Nutzeffektvektoren. Diese wiederum sind ein Ergebnis der multilinearen Regressionsanalyse.

Wenn jedoch ein unbekanntes Spektrum, beispielsweise von einer der zu untersuchenden Substanzen bzw. Stoffe in den Meßdaten des gemessenen Spektrums enthalten ist, erhält man als Ergebnis der multilinearen Regression eine unerklärte Abweichung, also ein Residuum, das einen bestimmten Grenzwert übersteigt. Dies zeigt das Vorhandensein einer nicht berücksichtigten spektralen Charakteristik bzw. Absorption einer Substanz auf.

Nach dem Abklingen des chromatographischen Peaks erreicht man wieder den Zustand der vollständigen Erklärtheit der Daten. Da nun die Beiträge der Effekte, also die mit den zugehörigen Koeffizienten gewichteten Effektvektoren vor und nach dem Erscheinen des Peaks bestimmt sind, können die Beiträge der Fehler-Effektvektoren von den Meßdaten während des Peaks eliminiert werden. Dies kann auf verschiedene Art und Weise geschehen.

Zu diesem Zwecke können zu den über der Zeit, gemäß Schritt $b_1$) erfaßten Meßdaten, mit Hilfe der Recheneinrichtung 11 die Fehler-Beiträge der abstrakten Effektvektoren ermittelt werden, die jeweils einem systematischen Meßfehler zugeordnet sind und die gemäß Schritt $a_2$) bestimmt wurden, wobei diejenigen Zeitpunkte erfaßt werden, zu denen aufgrund eines Effekts bestimmter Nutzinformationsträger, also hier der Absorption eines zu analysierenden Stoffes bzw. Stoffgemischs, das Residuum einen bestimmten Grenzwert übersteigt und nach einem Zeitintervall wieder erreicht, und wobei anschließend die Fehler-Beiträge der abstrakten Fehler-Effektvektoren, zu diesen Zeitpunkten in dem zwischenliegenden Zeitintervall linear interpoliert werden, so daß die um systematische Meßfehler bereinigten Nutzinformationen, also hier die wahren Absorptionswerte, in diesem Zeitintervall bestimmbar sind. Mithin werden zunächst die Koeffizienten der zugeordneten Effektvektoren im Peakintervall linear interpoliert.

Anschließend können die Meßdaten bzw. die Spektren um die Einzelbeiträge der unerwünschten Effekte korrigiert werden. Als Ergebnis erhält man den geschätzten wahren Absorptionsbeitrag der zu untersuchenden Substanz. Zur Korrektur der Meßdaten können eine Reihe von alternativen Verfahren angewandt werden.

Gemäß der bereits beschriebenen ersten Verfahrensalternative können mit Hilfe der linear interpolierten Fehler-Beiträge $k'_j$ um systematische Meßfehler bereinigte Schätzwerte der Absorptionswerte über der Wellenlänge und der Zeit unter Anwendung der folgenden Gleichung ermittelt werden:

$$A_{t,\lambda} = MW_{t,\lambda} - \sum_{j=1}^{q} k'_{t,j} \cdot Spec_{j,\lambda}$$

wobei $A_{t,\lambda}$ — ein Schätzwert der Absorption, $MW_{t,\lambda}$ - den Meßwert, $k'_{t,j}$ — die über der Zeit linear interpolierten Fehler-Beiträge, $Spec_{j,\lambda}$ — ein Effektvektor ist, der systematischen Meßfehlern zugeordnet ist, t und λ — die Variablen Wellenlänge und Zeit verkörpern, von denen die gemessenen Absorptionswerte abhängen und q - eine Anzahl abstrakter Fehlerterme betreffen.

Gemäß der zweiten Verfahrensalternative können zu den über der Zeit gemäß Schritt $b_1$) erfaßten Meßdaten mit Hilfe der Recheneinrichtung 11 die Fehler-Beiträge der abstrakten Effektvektoren ermittelt werden, die jeweils einem systematischen Meßfehler zugeordnet sind und die gemäß Schritt $a_2$) bestimmt wurden, wobei diejenigen Zeitpunkte erfaßt werden, bei denen aufgrund des Effekts eines bestimmten Stoffes das Residuum einen bestimmten Grenzwert übersteigt und nach einem Zeitintervall wieder erreicht, und wobei diejenigen Fehler-Beiträge in einem eingeschränkten Wellenlängenbereich ermittelt werden, in dem die zu untersuchende Substanz nicht absorbiert, und wobei anschließend mit Hilfe dieser Fehler-Beiträge um systematische Meßfehler bereinigte Schätzwerte der Absorption in dem Zeitintervall unter Anwendung der vorstehenden Gleichung im gesamten Wellenlängenbereich ermittelt werden.

Dies bedeutet, daß bei dieser Verfahrensalternative die Koeffizienten der zugehörigen abstrakten Fehler-Effektvektoren partiell über einen Wellenlängenbereich ermittelt werden, von denen man weiß, daß die zu untersuchende Substanz nicht absorbiert. Die Korrektur der unerwünschten Effekte wird dann mittels dieser partiell ermittelten Koeffizienten ausgeführt.

Die präzisesten Ergebnisse und weitere wesentliche Vorteile lassen sich bei Anwendung der dritten oder vierten Verfahrensalternative erreichen. Bei diesen Verfahren wird zunächst das unbekannte Substanzspektrum bzw. werden zunächst die unbekannten Substanzspektren ermittelt. Nachfolgend werden diese Spektren in das Model der multi-linearen Regression mit aufgenommen und mit Hilfe der Recheneinrichtung 11 wird die Regressionsrechnung über dem Peak bzw. über dem Peakcluster wiederholt. Dadurch erhält man die korrekten Koeffizientenverläufe, also auch die relativen Konzentrationen der unbekannten Substanzen. Mittels bekannter Eichprozeduren kann daraus die Substanzmenge errechnet werden.

Das Spektrum des den Effekt, also den Absorptionspeak verursachenden Stoffes kann mit Hilfe der linear interpolierten Fehler-Beiträge zu einem Zeitpunkt, bei der das Residuum einen Maximalwert erreicht unter Anwendung der folgenden Gleichung ermittelt werden:

$$\varepsilon_{x,\lambda} = MW_{t_x,\lambda} - \sum_{j=1}^{q} k'_{t_x,j} \cdot Spec_{j,\lambda}$$

wobei $\varepsilon_{x,\lambda}$ - das Spektrum des den Effekt verursachenden Stoffes x, $MW_{t_x,\lambda}$ - das gemessene Absorptionsspektrum zum Zeitpunkt $t_x$ über der Wellenlänge $\lambda$ ist, $k'_{t_x,j}$ - die zum Zeitpunk $t_x$ ermittelten Fehler-Beiträge der j abstrakten Effektvektoren $Spec_{j,\lambda}$ über der Wellenlänge $\lambda$ sind, und wobei das so ermittelte Spektrum zu dem gemäß Schritt $a_2$) ermittelten, den systematischen Meßfehlern zugeordneten abstrakten Effektvektoren hinzugefügt und nachfolgend für alle Effektvektoren unter Anwendung eines mathematischen Verfahrens, insbesondere einer linearen Regression, deren Effektvektor-Beiträge k" ermittelt werden, anhand derer die wahren Absorptionswerte, welche Schätzwerte darstellen und die systematischen Fehlerterme bestimmbar sind.

Es ist ebenfalls denkbar, das den Absorptionspeak verursachende Spektrum $\varepsilon_{x,\lambda}$ durch gewichtete Mittelwertbildung über ausgewählte Zeitintervalle über dem Peak mit Hilfe der linear interpolierten Fehler-Beiträge zu ermitteln.

Die Schätzwerte der wahren Absorption des den Effekt (Peak *x*) verursachenden Stoffes können zweckmäßiger Weise mit Hilfe der Effektvektor-Beiträge unter Anwendung der folgenden Gleichung ermittelt werden:

$$A_{t,\lambda,x} = k''_{t,x} \cdot \varepsilon_{x,\lambda}$$

wobei $A_{t,\lambda,x}$ die von den Variablen t und $\lambda$ abhängigen wahren Schätzwerte der Absorption des Stoffes x, $k''_{t,x}$ — die Effektvektor-Beiträge als Maß für die relative Konzentration und $\varepsilon_{x,\lambda}$ das Spektrum des Stoffes *x* ist.

Die Schätzwerte der den Meßwerten überlagerten Fehlerterme können zweckmäßiger Weise mit Hilfe der Beiträge der Fehler-Effektvektoren unter Anwendung der folgenden Gleichung ermittelt werden:

$$ErrSys_{t,\lambda,y} = k''_{t,y} \cdot Spec_{y,\lambda}$$

wobei $ErrSys_{t,\lambda,y}$ die von den Variablen t und $\lambda$ abhängigen wahren Schätzwerte der Fehlerterme y, $k''_{t,y}$ - die Effektvektor-Beiträge als Maß für die Fehlerbeiträge und $Spec_{x,\lambda}$ - die Fehlerchrakteristik des Fehlertermes *y* ist.

Nachfolgend wird beispielhaft anhand zweier Schaubilder, die Ergebnisse vor und nach der Durchführung des erfindungsgemäßen Verfahrens zur Bearbeitung von Meßdaten veranschaulicht:

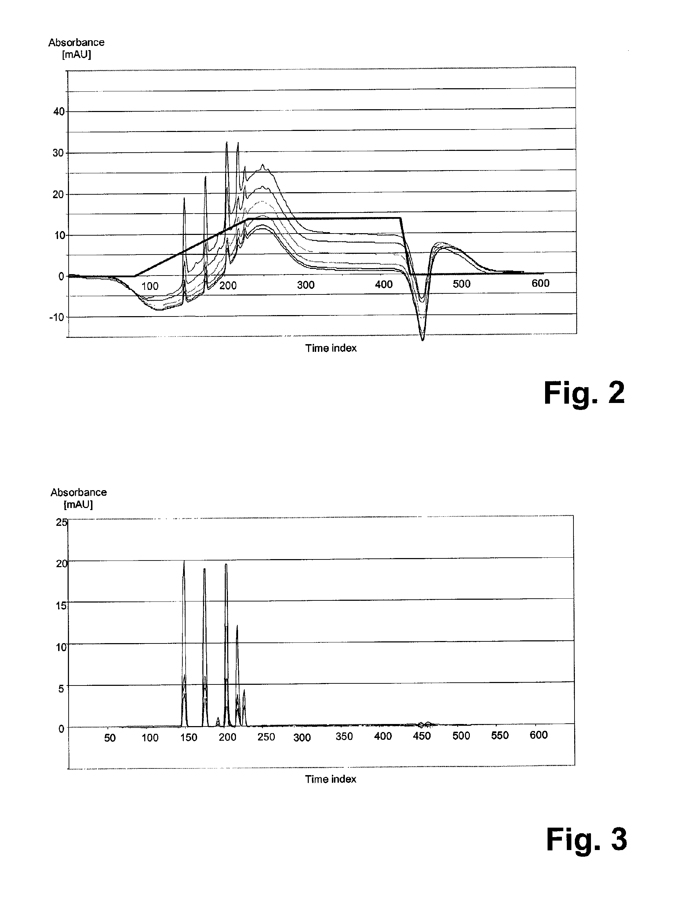

In Figur 2 ist der bei einer chromatographischen Analyse gemessene Absorptionsverlauf über der Zeit für unterschiedliche Wellenlängen graphisch dargestellt. Die Kurven entsprechen den bei mehreren Wellenlängen gemessenen chromatographischen Signalen, die simultan aufgezeichnet wurden. Die Überlagerungen von Nutzinformation und die Auswirkungen von systematischen Fehlertermen sind deutlich erkennbar. Der langgezogene Verlauf des Meßsignals mit Unter- und Überschwinger wird durch die systematischen Fehlerterme, bedingt durch Brechungsindex- und Flußeffekte verursacht. Diesen Verläufen überlagern sich noch Effekte aufgrund der Absorption des Lösungsmittels und die Peaks der zu untersuchenden Substanzen. Der zeitliche Verlauf der gewählten Lösungsmittelzusammensetzung ist anhand der fett gedruckten, durchgezogenen Linie mit linearen Abschnitten ersichtlich.

Im Unterscheid dazu veranschaulicht Figur 3 das Ergebnis nach der Durchführung des vorgeschlagenen Verfahrens zur Extraktion der Nutzinformation in Form der korrekten Absorptionsverläufe über der Zeit für unterschiedliche Wellenlängen der jeweiligen Substanzen. Es ist offensichtlich, das die quantitative Auswertung der Meß-Signale exakter möglich ist.

In der Praxis ist es wünschenswert, die mit Hilfe der Recheneinrichtung 11 durchgeführten Berechnungen nicht offline am Ende einer Analyse durchzuführen, sondern Ergebnisse online bereitzustellen. Dies kann dadurch erreicht werden, daß das mathematische Modell während einer Analyse dynamisch verändert wird.

Dabei werden in das mathematische Modell zunächst lediglich diejenigen Effektvektoren aufgenommen, die in einem vorangehenden Kalibrationszyklus ermittelt wurden. Solange kein Peak bzw. Peakcluster vorliegt oder wenn dieser bereits abgeklungen ist, erklärt sich zu jedem Zeitpunkt die Varianz des gemessenen Spektrums durch die Fehler-Effektvektoren und ihren ermittelten Koeffizienten bzw. Fehler-Beiträgen. Beim Auftreten eines Peaks wird das Modell erweitert, indem das beteiligte Spektrum der unbekannten Substanz vorübergehend in das Modell aufgenommen wird. Die Rechnung über dem Peak/Peakcluster wird danach mit dem modifizierten Modell wiederholt. Danach werden die Spektren wieder aus dem Modell genommen und die Rechnung bis zur Detektion des nächsten Peaks/ Peakclusters fortgeführt und fortgesetzt in gleicher Weise weiter verfahren. Mit diesem Verfahren oder unter Verwendung weiterer Prozeduren kann die rechnerische Behandlung der Daten über einen Peak oder über einen Peakcluster hinweg beliebig verfeinert werden.

Ein Vorteil der dynamischen Modellbildung besteht darin, daß die mit Hilfe der Recheneinrichtung 11 durchgeführten Berechnungen während einer Analyse nahezu in Realzeit erfolgen können und daß die Komplexität der Rechnung nicht mit der Anzahl der Substanzen einer Analyse zunimmt.

Als Ergebnis dieses Verfahrens erhält man eine Koeffizientenmatrix, in der die zeitlichen Verläufe der Konzentrationen der zu untersuchenden Substanzen und die Koeffizientenverläufe der Effektvektoren enthalten sind.

$$k_{t,v} = \begin{pmatrix} k_{t0,v0} & k_{t0,v1} & k_{t0,v2} & \cdots & k_{t0,vm} \\ k_{t1,v0} & k_{t1,v1} & k_{t1,v2} & \cdots & k_{t1,vm} \\ k_{t2,v0} & k_{t2,v1} & k_{t2,v2} & \cdots & k_{t2,vm} \\ \cdots & \cdots & \cdots & \cdots & \cdots \\ k_{tn,v0} & k_{tn,v1} & k_{tn,v2} & \cdots & k_{tn,vm} \end{pmatrix}$$

Vektoren (Substanzen, Fehler) — Zeit

Wobei n - die Anzahl der in dem mathematischen Modell berücksichtigten Vektoren (Substanzen, Fehler) und m - die Anzahl der Datenpunkte einer Messung über der Zeit sind.

Die Spalten der Koeffizientenmatrix repräsentieren den Zeitverlauf der zugehörigen Substanz bzw. des zugehörigen Effektes. Im vorliegenden Fall ist vorgesehen, daß die ersten drei Spalten den Verläufen der aufgelösten Konzentrationen von bis zu drei möglichen Substanzen in einem Peakcluster zugeordnet sind, während die weiteren Spalten der Koeffizientenmatrix den Verläufen der modellierten Effekte vorbehalten sind.

Zu beachten ist, daß der zeitliche Konzentrationsverlauf entsprechend der Peak-Erkennung gestückelt ist. Dies ist bei der Rekonstruktion der Daten bzw. der Ermittlung der Substanzmengen zu berücksichtigen. Da die zugehörigen Koeffizientenverläufe bereits den relativen Konzentrationen der gesuchten Substanzen entsprechen, ist die Ermittlung der Substanzmengen besonders einfach.

Die über der Zeit und der Wellenlänge abhängige Absorption einer zu untersuchenden Substanz x ergibt sich aus der Vektormultiplikation

$$A_{t,\lambda,x} = k''_{t,x} \cdot \varepsilon_{x,\lambda}$$

Bei der Verwendung der Verfahrensalternativen 1 und 2 wird die wahre Absorption einer unbekannten Substanz aus den gemessenen Daten durch Elimination der Beiträge aller Fehlerterme ermittelt. Nachteilig dabei ist jedoch, daß ein Großteil des den Meßdaten überlagerten Rauschens erhalten bleibt oder sich unter Umständen sogar verschlechtern kann.

Die Beiträge aller in dem mathematischen Modell berücksichtigten Terme können einfach ermittelt bzw. beliebig kombiniert werden oder können für Diagnostikzwecke interpretiert werden.

Die Linearkomponentenzerlegung der Meßdaten wird um so besser, je länger die spektralen Vektoren, d.h. je größer die Anzahl der Datenpunkte pro Spektrum sind. Dies bedeutet für das verbleibende Rauschen, daß sein Beitrag an dem Koeffizientenverlauf mit zunehmender Anzahl der Datenpunkte pro Spektrum kleiner wird. Bei einer Vektorlänge von 256 Datenpunkten wird das verbleibende Rauschen um mehr als eine Größenordnung reduziert. Dieser Vorteil geht weder zu Lasten der zeitlichen Auflösung noch zu Lasten der spektralen Auflösung, wie dies bei den bisher verwendeten Filterverfahren der Fall ist.

Folglich ergibt sich durch die Reduktion des verbleibenden Rauschens auf den Signalen durch die Anwendung des vorgeschlagenen Verfahrens eine weitere Möglichkeit zur Steigerung der Genauigkeit in der Ermittlung der Ergebnisse. Auch läßt sich dadurch bei einer chromatographischen Analyse die Nachweisgrenze nach unter verschieben. Mithin lassen sich kleinere Effekte als bisher zuverlässig detektieren und auswerten.

In Figur 4 ist ein Ausschnitt eines zeitlichen Meßsignalverlaufes vor und nach der Durchführung des erfindungsgemäßen Verfahrens aufgezeigt. Die gepunktet dargestellte Kurve bezieht sich auf den Meßsignalverlauf vor der Anwendung des erfindungsgemäßen Verfahrens und der mit einer durchgezogenen Linie dargestellte Meßsignalverlauf steht für das Ergebnis nach der Anwendung des erfindungsgemäßen Verfahrens. Vergleicht man die Standardabweichungen als Maß für das Rauschen, dann ist bei einer gewählten Vektorlänge von 50 Datenpunkten eine Verbesserung von größer Faktor sechs festzustellen. Wie bereits vorstehend erwähnt, erfolgt die Reduzierung des Rauschbeitrages nicht durch Filterung der Daten. Durch die zunehmende Anzahl der Datenpunkte der spektralen Vektoren ergeben sich in der Modellbildung höhere statistische Sicherheiten, was zur Reduzierung des verbleibenden Rauschens führt. Die zeitliche und die spektrale Auflösung bleiben davon unberührt.

Ein Grundgedanke der Erfindung ist es, daß sich die Meßdaten als eine Überlagerung von Nutzinformationen, systematischen Fehlertermen und statischem Rauschen darstellen lassen. Durch Zerlegung der Meßdaten mittels geeigneter mathematischer Verfahren mit Hilfe der Recheneinrichtung 11 in Linearkomponenten können die Fehler-Beiträge der systematischen Fehlerterme, die Nutzinformations-Beiträge der Nutzinformationsterme und die Beiträge des statistischen Rauschens mit Hilfe der Recheneinrichtung 11 bestimmt werden.

Das Verfahren findet Anwendung bei Meß-Systemen 10, die Daten in wenigstens zwei Dimensionen generieren. Das Verfahren umfaßt einen Kalibrationsschritt und einen Meßschritt. Der Kalibrationsschritt umfaßt eine vollständige Ermittlung der systembedingten Verhaltenscharakteristiken durch geeignete Stimulanzbildung und Extraktion der Effektvektoren aus den Kalibrationsdaten mit Hilfe der Recheneinrichtung 11. Bei dem Meßschritt werden während des Ablaufens eines technisches Prozesses mit Hilfe des Meßsystems 10 Meßdaten von bzw. über interessierende Nutzinformationen durch ein sich dynamisch veränderndes mathematisches Modell mit Hilfe der Recheneinrichtung 11 in Linearkomponenten zerlegt und zwar beginnend mit den systembedingten Fehler-Effektvektoren und der weiteren Aufnahme bzw. Wegnahme von Nutzinformations-Vektoren beim Auftreten bzw. Abklingen von den Nutzinformationen von Nutzinformationsträgern zugeordneten Effekten. Im Falle eines als chromatographisches Analysensystem gestalteten Meßsystems 10 entsprechen die Nutzinformations-Vektoren den spektralen Vektoren und bei den Nutzinformationsträgern zugeordneten Nutzinformationen handelt es sich um die den zu analysierenden Substanzen oder probenbedingten Verunreinigungen zugeordneten Absorptionspeaks.

Mit diesem Verfahren ist auch die rechnerische Separierung von nicht vollständig getrennten Peaks möglich und auch ganze Peakcluster können korrekt analysiert werden.

Als Resultat des Verfahrens erhält man die korrekten Koeffizientenverläufe aller am Meßergebnis beteiligten Komponenten. Für die zu untersuchenden Substanzen entspricht dies dem relativen Konzentrationsverlauf, der in diesem Falle nicht von einem chromatographischen Einzel-Signal abgeleitet wird, sondern der Wirkungsstärke eines ganzen Spektrums entspricht. Für die Fehlerterme entspricht dies den zugordneten Fehlerbeiträgen der Fehler-Effektvektoren. Da mit diesem Verfahren eine große Anzahl an Datenpunkten an der Ermittlung des Ergebnisses beteiligt ist, erhöht sich die statistische Sicherheit. Das verbleibende Rauschen wird dadurch signifikant reduziert.

Wesentliche Beiträge der Erfindung:

- Verbesserung der Genauigkeit und der Präzision der Meßergebnisse durch die weitgehende Eliminierung von überlagerten Fehlertermen bzw. von system- und probenbedingten Störungen.
- Verbesserung der Nachweisgrenze durch weitgehende Unterdrückung des verbleibenden Rauschens.
- Korrekte Ermittlung der Konzentrationsverläufe von nicht vollständig getrennten Substanzen.

- Hohe Plausibilität in den Ergebnissen durch Zerlegung der Meßdaten in Linearkomponenten und dadurch Zuordnung und Erfassung der jeweiligen Einzelbeiträge.
- Hohe Plausibilität der Meßergebnisse durch automatisches Erkennen nicht erklärter Anteile in den Meßdaten.
- Reduzierung der Kosten durch Verringerung der Anforderungen an die Komponenten des Meßsystems bzw. Detektors durch die Möglichkeit die Fehlerbeiträge rechnerisch zu eliminieren.

**Patentansprüche**

1.  Verfahren zur Bearbeitung von Meßdaten, die unter Verwendung eines Meßsystems, insbesondere eines chromatographischen Analysensystems, zur Messung von Meßwerten meßbar sind, die bestimmten Nutzinformationen über bzw. von einem technischen Prozeß zugeordnet sind und die von wenigstens zwei Variablen abhängig sind,
    **gekennzeichnet durch** die folgenden Schritte:

    c) Durchführung eines Kalibrationsschrittes umfassend:

    $a_1$) Stimulierung des Meßsystems (10) **durch** Veränderung von systematische Meßfehler verursachenden Einflußgrößen und Erfassung der zugehörigen Meßdaten mit Hilfe des Meßsystems (10);
    $a_2$) Ermittlung von systematischen Meßfehlern zugeordneten Effektvektoren aus den in Schritt $a_1$) erfaßten Meßdaten, unter Anwendung eines mathematischen Verfahrens, insbesondere einer Faktoranalyse, wobei die den Meßfehlern zugeordneten Effektvektoren einem mathematischen Modell zu Grunde liegen, mit dem die Meßdaten zumindest annähernd abschätzbar sind und das wenigstens einen Fehlerterm beinhaltet, der einen einem Meßfehler zugeordneten Effektvektor und einen zugehörigen Fehlerbeitrag umfasst;

    d) Durchführung eines Meßschrittes umfassend:

    $b_1$) Erfassung von Meßdaten, die bestimmten Nutzinformationen über den bzw. von dem technischen Prozeß zugeordnet sind, während der technische Prozeß abläuft;
    $b_2$) Zerlegung der in Schritt $b_1$) erfaßten Meßdaten in Linearkomponenten, basierend auf den gemäß Schritt $a_2$) ermittelten, den Meßfehlern zugeordneten Effektvektoren, unter Anwendung eines mathematischen Verfahrens, insbesondere einer linearen Regression, zur Ermittlung der Fehlerbeiträge, anhand derer die um systematische Meßfehler bereinigten Nutzinformationen bestimmbar sind.

2.  Verfahren nach Anspruch 1, **dadurch gekennzeichnet, daß** die Nutzinformationen aus den Meßdaten unter Berücksichtigung der Fehlerbeiträge unter Anwendung von dem mathematischen Modell zu Grunde liegenden mathematischen Algorithmen bestimmt werden.

3.  Verfahren nach einem der Ansprüche 1 oder 2, **dadurch gekennzeichnet, daß** das mathematische Modell bei von zwei Variablen abhängigen Meßdaten, die bestimmte Meßwerte verkörpern, auf der folgenden Gleichung basiert:

$$MW_{a,b} = kn \cdot \sum_{i=1}^{p} NB_{a,i} \cdot NV_{i,b} + kf \cdot \sum_{j=1}^{q} FB_{a,j} \cdot FV_{j,b} + R_{a,b}$$

wobei MW - ein Meßwert, FB - ein Fehler-Beitrag, FV - ein systematischen Meßfehlern zugeordneter Effektvektor, NB - ein Nutzinformations-Beitrag, und NV-ein einer Nutzinformation zugeordneter Effektvektor, R - ein Residuum und a und b - Variablen sind, von denen der Meßwert abhängig ist, sowie p - eine Anzahl von Nutzinformationsträgern und q - eine Anzahl abstrakter Fehlerterme, und wobei die Skalare kn und kf Skalierungsfaktoren der Summenterme darstellen.

4.  Verfahren nach einem der Ansprüche 1 bis 3, **dadurch gekennzeichnet, daß** bei einem als Absorptionsmeßsystem (20) gestalteten chromatographischen Analysensystem, das Meßdaten in Form von Absorptionswerten über der Wellenlänge und über der Zeit generiert, das mathematische Modell auf der folgenden Gleichung basiert:

$$MW_{t,\lambda} = d \cdot \sum_{i=1}^{p} c_{t,i} \cdot \varepsilon_{i,\lambda} + \sum_{j=1}^{q} k_{t,j} \cdot Spec_{j,\lambda} + R_{t,\lambda}$$

wobei MW - ein über der Zeit t und der Wellenlänge $\lambda$ veränderlicher Absorptionsmeßwert, d - eine Schichtlänge einer Flußzelle, c - eine Konzentration einer Substanz i, d.h. ein Nutzinformations-Beitrag eines eine Nutzinformation charakterisierenden Effektvektors, hier des Extinktionskoeffizienten $\varepsilon$ ist, k - ein Fehler-Beitrag des einem systematischen Meßfehler zugeordneten Effektvektors (Spec) ist, R - ein Residuum, p - eine Anzahl von Substanzen, die zum Absorptionsspektrum beitragen und q - eine Anzahl von abstrakten Fehlertermen darstellen.

5. Verfahren nach einem der Ansprüche 3 oder 4, **dadurch gekennzeichnet, daß** zu den über der Variable a oder b, beispielsweise der Zeit, gemäß Schritt b$_1$) erfaßten Meßdaten, die Fehler-Beiträge der abstrakten Effektvektoren ermittelt werden, die jeweils einem systematischen Meßfehler zugeordnet sind und die gemäß Schritt a$_2$) bestimmt wurden, wobei diejenigen Werte der Variablen bzw. Zeitpunkte erfaßt werden, zu denen aufgrund eines Effekts bestimmter Nutzinformationsträger das Residuum einen bestimmten Grenzwert übersteigt und nach einem Werte-Intervall bzw. Zeitintervall wieder erreicht, und wobei anschließend die Fehler-Beiträge der abstrakten Effektvektoren, die systematischen Meßfehlern zugeordnet sind, bei diesen Werten der Variablen bzw. zu diesen Zeitpunkten in dem zwischenliegenden Werte-Intervall bzw. Zeitintervall linear interpoliert werden, so daß die um systematische Meßfehler bereinigten Nutzinformationen in diesem Werte-Intervall bzw. Zeitintervall bestimmbar sind.

6. Verfahren nach Anspruch 5, **dadurch gekennzeichnet, daß** mit Hilfe der linear interpolierten Fehler-Beiträge um systematische Meßfehler bereinigte Schätzwerte der Nutzinformation unter Anwendung der folgenden Gleichung ermittelt werden:

$$SW_{a,b} = MW_{a,b} - \sum_{j=1}^{q} FB'_{a,j} \cdot FV_{j,b}$$

wobei SW - ein Schätzwert der Nutzinformation, MW - ein Meßwert, FB' - über der Zeit linear interpolierte Fehler-Beiträge, FV - ein Effektvektor ist, der systematischen Meßfehlern zugeordnet ist, a und b - Variablen sind, von denen der Meßwert abhängig ist und q - eine Anzahl abstrakter Fehlerterme darstellen.

7. Verfahren nach einem der Ansprüche 5 oder 6, **dadurch gekennzeichnet, daß** bei einem als Absorptionsmeßsystem (20) gestalteten chromatographischen Analysensystem, das Meßdaten in Form von Absorptionswerten über der Wellenlänge und über der Zeit generiert, mit Hilfe von linear interpolierten Fehler-Beiträgen um systematische Meßfehler bereinigte Schätzwerte der Absorptionswerte unter Anwendung der folgenden Gleichung ermittelt werden:

$$A_{t,\lambda} = MW_{t,\lambda} - \sum_{j=1}^{q} k'_{t,j} \cdot Spec_{j,\lambda}$$

wobei A - ein Schätzwert der Absorption, MW - ein Meßwert, k' - über der Zeit linear interpolierte Fehler-Beiträge, Spec - ein Effektvektor ist, der systematischen Meßfehlern zugeordnet ist, t und $\lambda$ — die Variablen Wellenlänge und Zeit verkörpern, von denen die gemessenen Absorptionswerte abhängig sind und q - eine Anzahl abstrakter Fehlerterme darstellen.

8. Verfahren nach einem der Ansprüche 3 oder 4, **dadurch gekennzeichnet, daß** zu den über der Variable a oder b gemäß Schritt b$_1$) erfaßten Meßdaten die Fehler-Beiträge der abstrakten Effektvektoren ermittelt werden, die jeweils einem systematischen Meßfehler zugeordnet sind und die gemäß Schritt a$_2$) bestimmt wurden, wobei diejenigen Werte der Variablen erfaßt werden, zu denen aufgrund eines Effekts bestimmter Nutzinformationsträger das Residuum einen bestimmten Grenzwert übersteigt und nach einem Werte-Intervall wieder erreicht, und wobei diejenigen Fehler-Beiträge in einem eingeschränkten Bereich ermittelt werden, der einer der Variablen a oder b zugeordnet ist und in dem innerhalb des Werte-Intervalls keine Nutzinformation vorliegt, und wobei mit Hilfe dieser Fehler-Beiträge um systematische Meßfehler bereinigte zugeordnete Schätzwerte der Nutzinformationen in dem Werte-Intervall unter Anwendung der Gleichung gemäß Anspruch 6 im gesamten Bereich der Variable a oder b ermittelt werden.

**9.** Verfahren nach einem der Ansprüche 3 oder 4, **dadurch gekennzeichnet, daß** bei einem als Absorptionsmeßsystem (20) gestalteten chromatographischen Analysensystem, das Meßdaten in Form von Absorptionswerten über der Wellenlänge und über der Zeit generiert, zu den über der Zeit gemäß Schritt $b_1$) erfaßten Meßdaten die Fehler-Beiträge der abstrakten Effektvektoren ermittelt werden, die jeweils einem systematischen Meßfehler zugeordnet sind und die gemäß Schritt $a_2$) bestimmt wurden, wobei diejenigen Zeitpunkte erfaßt werden, bei denen aufgrund des Effekts eines bestimmten Stoffes das Residuum einen bestimmten Grenzwert übersteigt und nach einem Zeitintervall wieder erreicht, und wobei diejenigen Fehler-Beiträge in einem eingeschränkten Wellenlängenbereich ermittelt werden, in dem die zu untersuchende Substanz nicht absorbiert, und wobei anschließend mit Hilfe dieser Fehler-Beiträge um systematische Meßfehler bereinigte Schätzwerte der Absorption in dem Zeitintervall unter Anwendung der Gleichung gemäß Anspruch 7 im gesamten Wellenlängenbereich ermittelt werden.

**10.** Verfahren nach Anspruch 5, **dadurch gekennzeichnet, daß** mit Hilfe der linear interpolierten Fehler-Beiträge an einer Stelle, bei der das Residuum einen Maximalwert erreicht, ein der Nutzinformation des den Effekt verursachenden Nutzinformationsträgers zugeordneter Effektvektor unter Anwendung der folgenden Gleichung ermittelt wird

$$NV_{i,b} = MW_{a_i,b} - \sum_{j=1}^{q} FB'_{a_i,j} \cdot FV_{j,b}$$

wobei $NV_{i,b}$ - ein Effektvektor des Nutzinformationsträgers i, $MW_{ai,b}$ - ein Meßwert, $FB'_{ai,j}$ - linear interpolierte Fehler-Beiträge, $FV_{j,b}$ - ein den systematischen Meßfehlern zugeordneter Effektvektor sowie a und b- Variablen sind, von denen der Meßwert abhängig ist,
und wobei der so ermittelte, den Nutzinformationen des Nutzinformationsträgers zugeordnete Effektvektor, zu den gemäß Schritt $a_2$) ermittelten, den systematischen Meßfehlern zugeordneten abstrakten Effektvektoren hinzugefügt und nachfolgend für alle Effektvektoren unter Anwendung eines mathematischen Verfahrens, insbesondere einer linearen Regression, deren Effektvektor-Beiträge ermittelt werden, anhand derer die Nutzinformationen bestimmbar sind.

**11.** Verfahren nach Anspruch 5, **dadurch gekennzeichnet, daß** innerhalb des Werte-Intervalls bzw. Zeitintervalls, in welchem das Residuum, verursacht durch die Überlagerung von mehreren Nutzinformationsträgern, einen bestimmten Grenzwert übersteigt und nach einem Werte-Intervall bzw. Zeitintervall wieder erreicht, alle Nutzinformations-Beiträge und alle systematischen Fehlerbeiträge, die zu den jeweiligen Meßwerten beitragen, bestimmt werden,
wobei zunächst mit Hilfe der linear interpolierten Fehlerbeiträge die um systematische Meßfehler bereinigten Schätzwerte der wahren Nutzinformation ermittelt und anschließend mit Hilfe eines mathematischen Verfahrens, beispielsweise der Multikomponentenanalyse, die der Nutzinformation zugeordneten Effektvektoren aller beteiligten Nutzinformationsträger berechnet werden, die nachfolgend den systematischen Meßfehlern zugeordneten Fehler-Effektvektoren hinzugefügt und für alle Effektvektoren unter Anwendung eines mathematischen Verfahrens, insbesondere einer multi-linearen Regression, deren Effektvektor-Beiträge ermittelt werden, anhand derer die Nutzinformationen und die systematischen Meßfehler bestimmbar sind.

**12.** Verfahren nach einem der Ansprüche 10 oder 11, **dadurch gekennzeichnet, daß** um die systematischen Meßfehler bereinigten Schätzwerte der Nutzinformationen mit Hilfe von Effektvektor-Beiträgen unter Anwendung der folgenden Gleichung ermittelt werden:

$$SW_{a,b,i} = NB''_{a,i} \cdot NV_{i,b}$$

wobei $SW_{a,b,i}$ von den Variablen a und b abhängige wahre Schätzwerte der Nutzinformation des Nutzinformationsträgers i, $NB''_{a,i}$ - Effektvektor-Beiträge und $NV_{i,b}$ - ein Effektvektor des Nutzinformationsträgers i darstellen.

13. Verfahren nach einem der Ansprüche 5, 10 oder 11, **dadurch gekennzeichnet, dass** bei einem als Absorptionsmeßsystem (20) gestalteten chromatographischen Analysensystem, das Meßdaten in Form von Absorptionswerten über der Wellenlänge und über der Zeit generiert, mit Hilfe von linear interpolierten Fehler-Beiträgen zu einem Zeitpunkt, bei der das Residuum einen Maximalwert erreicht, ein Spektrum des den Effekt verursachenden Stoffes unter Anwendung der folgenden Gleichung ermittelt wird:

$$\varepsilon_{x,\lambda} = MW_{t_x,\lambda} - \sum_{j=1}^{q} k'_{t_x,j} \cdot Spec_{j,\lambda}$$

wobei $\varepsilon_{x,\lambda}$ - ein Spektrum des den Effekt verursachenden Stoffes x, $MW_{t_x,\lambda}$ -ein gemessenes Absorptionsspektrum zum Zeitpunkt $t_x$ über der Wellenlänge $\lambda$ ist, $k'_{t_x,j}$ - zum Zeitpunk $t_x$ ermittelte Fehler-Beiträge von j abstrakten Effektvektoren $Spec_{j,\lambda}$ über der Wellenlänge $\lambda$ darstellen,
und wobei das so ermittelte Spektrum zu dem gemäß Schritt $a_2$) ermittelten, den systematischen Meßfehlern zugeordneten abstrakten Effektvektoren hinzugefügt und nachfolgend für alle Effektvektoren unter Anwendung eines mathematischen Verfahrens, insbesondere einer linearen Regression, deren Effektvektor-Beiträge ermittelt werden, anhand derer die um systematische Meßfehler bereinigten Nutzinformationen bestimmbar sind.

14. Verfahren nach Anspruch 13, **dadurch gekennzeichnet, daß** die Schätzwerte der Absorption des den Effekt (Peak) verursachenden Stoffes mit Hilfe der Effektvektor-Beiträge unter Anwendung der folgenden Gleichung ermittelt werden:

$$A_{t,\lambda,x} = k''_{t,x} \cdot \varepsilon_{x,\lambda}$$

wobei $A_{t,\lambda,x}$ von den Variablen t und $\lambda$ abhängige wahre Schätzwerte der Nutzinformation des Stoffes x, $k''_{t,x}$ - Effektvektor-Beiträge und $\varepsilon_{x,\lambda}$ - ein Spektrum des Stoffes x darstellen.

15. Vorrichtung zur Durchführung des Verfahrens nach einem der Ansprüche 1 bis 14, zur Bearbeitung von Meßdaten, die unter Verwendung eines Meßsystems, insbesondere eines chromatographischen Analysensystems, zur Messung von Meßwerten meßbar sind, die bestimmten Nutzinformationen über bzw. von einem technischen Prozeß zugeordnet sind und die von wenigstens zwei Variablen abhängig sind, wobei mit dem Meßsystem eine Recheneinrichtung zur Ermittlung von Rechenwerten aus den Meßdaten und zur Weiterverarbeitung derselben gekoppelt ist,
**gekennzeichnet durch** die folgenden Schritte:

   a) Durchführung eines Kalibrationsschrittes umfassend:

   $a_1$) Stimulierung des Meßsystems (10) **durch** Veränderung von systematische Meßfehler verursachenden Einflußgrößen und Erfassung der zugehörigen Meßdaten mit Hilfe des Meßsystems (10);
   $a_2$) Ermittlung von systematischen Meßfehlern zugeordneten Effektvektoren aus den in Schritt $a_1$) erfaßten Meßdaten mit Hilfe der Recheneinrichtung (11), unter Anwendung eines mathematischen Verfahrens, insbesondere einer Faktoranalyse, wobei die den Meßfehlern zugeordneten Effektvektoren einem mathematischen Modell zu Grunde liegen, mit dem die Meßdaten zumindest annähernd abschätzbar sind und das wenigstens einen Fehlerterm beinhaltet, der einen einem Meßfehler zugeordneten Effektvektor und einen zugehörigen Fehlerbeitrag umfaßt;

   b) Durchführung eines Meßschrittes umfassend:

   $b_1$) Erfassung von Meßdaten, die bestimmten Nutzinformationen über den bzw. von dem technischen Prozeß zugeordnet sind, während der technische Prozeß abläuft;

$b_2$) Zerlegung der in Schritt $b_1$) erfaßten Meßdaten in Linearkomponenten, basierend auf den gemäß Schritt $a_2$) ermittelten, den Meßfehlern zugeordneten Effektvektoren mit Hilfe der Recheneinrichtung (11), unter Anwendung eines mathematischen Verfahrens, insbesondere einerlinearen Regression, zur Ermittlung der Fehlerbeiträge, anhand derer die um systematische Meßfehler bereinigten Nutzinformationen bestimmbar sind.

**Fig. 1**

**Fig. 4**

Absorbance
[mAU]

**Fig. 2**

Absorbance
[mAU]

**Fig. 3**

**Europäisches Patentamt**

# EUROPÄISCHER RECHERCHENBERICHT

Nummer der Anmeldung

EP 02 00 2215

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 299 652 A (HEWLETT PACKARD CO) 18. Januar 1989 (1989-01-18) * Seite 1, Zeile 5 – Seite 5, Zeile 9 * --- | 1 | G06F17/00 G01N30/86 |
| A | WO 93 21592 A (DOW CHEMICAL CO) 28. Oktober 1993 (1993-10-28) * Seite 1, Zeile 3 – Seite 10, Zeile 3 * --- | 1 | |
| A | EP 0 294 121 A (HEWLETT PACKARD CO) 7. Dezember 1988 (1988-12-07) * Seite 4, Zeile 40 – Seite 5, Zeile 47 * --- | 1 | |
| A | EP 0 222 612 A (ESA INC) 20. Mai 1987 (1987-05-20) * Seite 2, Zeile 5 – Seite 3, Zeile 2 * --- | 1 | |
| A | EP 0 295 966 A (APPLIED BIOSYSTEMS) 21. Dezember 1988 (1988-12-21) * Seite 4, Zeile 8 – Zeile 46 * ----- | 1 | |

**RECHERCHIERTE SACHGEBIETE (Int.Cl.7)**

G06F
G01N

Der vorliegende Recherchenbericht wurde für alle Patentansprüche erstellt

| Recherchenort | Abschlußdatum der Recherche | Prüfer |
|---|---|---|
| DEN HAAG | 2. August 2002 | Schenkels, P |

**ANHANG ZUM EUROPÄISCHEN RECHERCHENBERICHT
ÜBER DIE EUROPÄISCHE PATENTANMELDUNG NR.**
EP 02 00 2215

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-08-2002

| Im Recherchenbericht angeführtes Patentdokument | Datum der Veröffentlichung | Mitglied(er) der Patentfamilie | Datum der Veröffentlichung |
|---|---|---|---|
| EP 0299652 A | 18-01-1989 | US 4802102 A | 31-01-1989 |
| | | DE 3878764 D1 | 08-04-1993 |
| | | EP 0299652 A1 | 18-01-1989 |
| | | JP 1035265 A | 06-02-1989 |
| WO 9321592 A | 28-10-1993 | CA 2133412 A1 | 28-10-1993 |
| | | EP 0636261 A1 | 01-02-1995 |
| | | JP 8500898 T | 30-01-1996 |
| | | WO 9321592 A1 | 28-10-1993 |
| | | US 5592402 A | 07-01-1997 |
| EP 0294121 A | 07-12-1988 | US 4807148 A | 21-02-1989 |
| | | DE 3854537 D1 | 09-11-1995 |
| | | DE 3854537 T2 | 21-03-1996 |
| | | EP 0294121 A2 | 07-12-1988 |
| | | JP 3045729 B2 | 29-05-2000 |
| | | JP 63308560 A | 15-12-1988 |
| EP 0222612 A | 20-05-1987 | EP 0222612 A2 | 20-05-1987 |
| | | JP 62127667 A | 09-06-1987 |
| EP 0295966 A | 21-12-1988 | US 4852017 A | 25-07-1989 |
| | | DE 3883439 D1 | 30-09-1993 |
| | | DE 3883439 T2 | 21-04-1994 |
| | | EP 0295966 A2 | 21-12-1988 |
| | | JP 1221664 A | 05-09-1989 |
| | | JP 2701866 B2 | 21-01-1998 |

EPO FORM P0461

Für nähere Einzelheiten zu diesem Anhang : siehe Amtsblatt des Europäischen Patentamts, Nr.12/82